# EUROPEAN PATENT APPLICATION

(11) **EP 3 603 966 A1**
(43) Date of publication of application: **05.02.2020**
(21) Application number: 18775987.3
(22) Date of filing: 22.03.2018
(51) Int. Cl.: B32B 27/18, B32B 27/00, B32B 27/30, B32B 27/40, C08J 5/18, C08K 5/35, C08K 5/45, C08L 101/00, G02B 1/04, G02B 1/11, G02B 5/22, G02C 7/00, G02C 7/10

(54) **RESIN MOLDED BODY AND BLUE LIGHT CUT LAMINATED BODY**

(30) Priority: 31.03.2017 JP 2017071851
(71) Applicant: FUJIFILM Corporation, Tokyo 106-8620 (JP)
(72) Inventor: KASAHARA, Takehiro, Fujinomiya-shi Shizuoka 418-8666 (JP); NAKAGAWA, Yuki, Fujinomiya-shi Shizuoka 418-8666 (JP)
(74) Representative: Hoffmann Eitle
(86) International application number: PCT/JP2018/011526
(87) International publication number: WO 2018/180929

(57) **Abstract**

Provided are a resin molded body and applications thereof. The resin molded body includes a resin layer containing a resin and a compound represented by Formula (1), and on at least one surface of the resin layer, a protective layer that contains at least one substance selected from the group consisting of urethane resin, acrylic resin, and polysiloxane. In Formula (1), Het¹ represents a divalent 5-membered or 6-membered aromatic heterocyclic residue. X^{a}, X^{b}, X^{c}, and X^{d} each independently represent a hetero atom, and Y^{a}, Y^{b}, Y^{c}, Y^{d}, Y^{e}, and Y^{f} each independently represent a hetero atom or a carbon atom. A ring bonded to Het¹ may have a double bond at any position.

## Description

### BACKGROUND OF THE INVENTION

### 1. Field of the Invention

The present invention relates to a resin molded body and a blue light cut laminate.

### 2. Description of the Related Art

In various displays such as image display devices such as a cathode ray tube display device, a plasma display, an electroluminescent display, a fluorescence display, a field emission display, and a liquid crystal display (LCD), and a smart phone or a tablet terminal equipped with a touch panel, a screen of a display provided with a light source is visually used.

In recent years, the influence of ultraviolet rays and blue light on the retina in a case of using an image display device, a small terminal equipped with a touch panel, and the like for a long time has been attracting attention. In addition, in a large display and the like, it is also desirable to reduce the influence of ultraviolet rays and blue light on the retina.

For the purpose of reducing the influence of near-ultraviolet rays with a wavelength of 400 nm to 420 nm and blue light (hereinafter sometimes referred to as ultraviolet rays or the like) on the retina, by coating the light source with a resin molded body containing an ultraviolet absorber, or coating the surface of an image display device with a protective sheet containing an ultraviolet absorber, it is possible to reduce the influence of ultraviolet rays or the like on the retina.

In addition, as another method, attempts have been made to absorb ultraviolet rays by a spectacle lens attached in a case of viewing a screen of a display provided with a light source to reduce the influence of ultraviolet rays or the like on the retina of a user.

As a resin molded body that has a good ultraviolet blocking effect, a resin molded body containing an ultraviolet absorber having an oxazinone skeleton excellent in long wavelength ultraviolet absorbing ability in an amount of 5 g/m² or less and a polymer film are proposed (refer to JP2010-132846A). It is described that since a high ultraviolet absorbing effect can be obtained with a small amount of ultraviolet absorber described in JP2010-132846A, compared to a case where a larger amount of conventionally known ultraviolet absorber is added to the resin molded body, the effect of addition of the ultraviolet absorber with respect to the physical properties of the resin molded body is less likely to be exhibited.

In addition, an ultraviolet ray resistant polyester resin composition in which ultraviolet absorbing ability is maintained by introducing a reactive group into the ultraviolet absorber to perform polymerization with a base resin even in a case where the composition is used for a long period of time is proposed (refer to JP2016-259624A). It is described that in the polyester resin composition described in JP2016-259624A, even in a case where the composition is used for a long period of time, the elution of the ultraviolet absorber from the resin composition is suppressed by bonding the ultraviolet absorber and the resin, and the ultraviolet absorption performance is maintained for a long period of time.

### SUMMARY OF THE INVENTION

However, according to the studies conducted by the present inventors, it has been found that in a case where the resin molded body described in JP2010-132846A is used for a long period of time or in a case where a resin having low compatibility with an ultraviolet absorber having an oxazinone skeleton is added, particularly, in a case where the composition is used for a long period of time in a high humidity and heat environment, the ultraviolet absorber contained in the resin molded body is leached to the surface of the resin molded body, the resin molded body is whitened, and the haze is increased in some cases. Therefore, the resin molded body described in JP2010-132846A still has room for improvement in terms of durability in a high humidity and heat environment.

In addition, the polyester resin composition described in JP2016-259624A is a resin composition which is mainly applied to a back sheet for a solar cell, and is effective for ultraviolet rays of a shorter wavelength, specifically, ultraviolet rays of a wavelength of 350 nm or less. However, there is a problem that it is not suitable for blocking ultraviolet rays and blue light on a longer wavelength side of 400 nm to 420 nm.

In addition, according to the studies by the present inventors, when a reactive group is introduced into the ultraviolet absorber described in JP2016-259624A to suppress the leaching of the ultraviolet absorber from the resin molded product, it has been found that the ultraviolet absorbing ability is significantly decreased due to the change of the structure.

An object achieved by one embodiment of the present invention is to provide a resin molded body in which long wavelength ultraviolet ray and blue light blocking properties are good, even in a case of being used for a long period of time, an increase in haze due to the leaching of an ultraviolet absorber is suppressed, and the long wavelength ultraviolet ray and blue light blocking properties are maintained.

Another object achieved by another embodiment of the present invention is to provide a blue light cut laminate in which even in a case of being used for a long period of time, an increase in haze due to the leaching of an ultraviolet absorber is suppressed, and the long wavelength ultraviolet ray and blue light blocking properties are maintained for a long period of time.

Means for achieving the objects include the following embodiments.
<1> A resin molded body comprising: a resin layer containing a resin and a compound represented by Formula (1); and on at least one surface of the resin layer, a protective layer that contains at least one substance selected from the group consisting of urethane resin, acrylic resin, and polysiloxane. 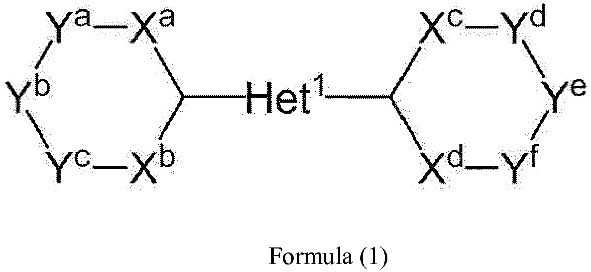
   In Formula (1), Het¹ represents a divalent 5-membered or 6-membered aromatic heterocyclic residue.
   X^{a}, X^{b}, X^{c}, and X^{d} each independently represent a hetero atom.
   Y^{a}, Y^{b}, Y^{c}, Y^{d}, Y^{e}, and Y^{f} each independently represent a hetero atom or a group containing a carbon atom.
   A ring bonded to Het¹ may have a double bond at any position.
<2> The resin molded body according to <1>, in which a content of the compound represented by Formula (1) with respect to a total amount of the resin layer is more than 0% by mass and 5.0% by mass or less.
<3> The resin molded body according to <1> or <2>, in which a thickness of the protective layer is 0.5 µm to 10 µm.
<4> The resin molded body according to any one of <1>to <3>, in which the protective layer contains a urethane resin or an acrylic resin, and a solubility parameter of the protective layer calculated by a Fedors method is in a range of 20 (J/cm³)^{1/2} to 28 (J/cm³)^{1/2}.
<5> The resin molded body according to <4>, further comprising: an antireflection layer on a surface of the protective layer opposite to a surface in contact with the resin layer.
<6> The resin molded body according to any one of <1> to <5>, in which the compound represented by Formula (1) is a compound represented by Formula (2). 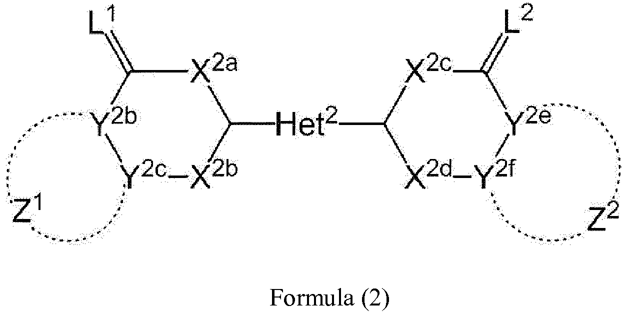
   In Formula (2), Het² is the same as Het¹ in Formula (1).
   X^{2a}, X^{2b}, X^{2c}, and X^{2d} are the same as X^{a}, X^{b}, X^{c}, and X^{d} in Formula (1), respectively.
   Y^{2b}, Y^{2c}, Y^{2e}, and Y^{2f} are the same as Y^{b}, Y^{c}, Y^{e}, and Y^{f} in Formula (1), respectively.
   L¹ and L² each independently represent an oxygen atom, a sulfur atom or NR^{a}, R^{a} represents a hydrogen atom or a monovalent substituent.
   Z¹ and Z² each independently represent an atomic group required to be mutually combined with Y^{2b} and Y^{2c} or Y^{2e} and Y^{2f} to form a 4-membered to 8-membered ring.
<7> The resin molded body according to <6>, in which the compound represented by Formula (2) is a compound represented by Formula (3). 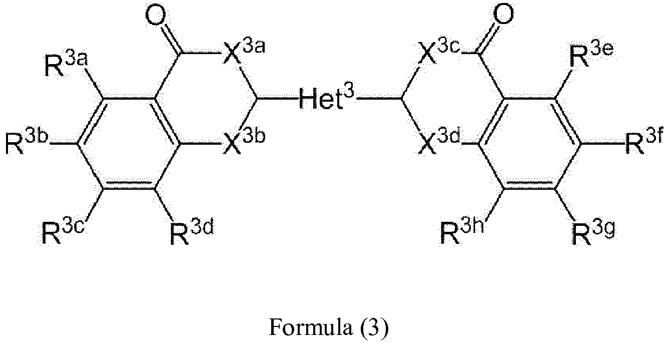
   In Formula (3), Het³ is the same as Het² in Formula (2).
   X^{3a}, X^{3b}, X^{3c}, and X^{3d} are the same as X^{2a}, X^{2b}, X^{2c}, and X^{2d} in Formula (2), respectively.
   R^{3a}, R^{3b}, R^{3c}, R^{3d}, R^{3e}, R^{3f}, R^{3g}, and R^{3h} each independently represent a hydrogen atom or a monovalent substituent.
<8> The resin molded body according to <7>, in which the compound represented by Formula (3) is a compound represented by Formula (4). 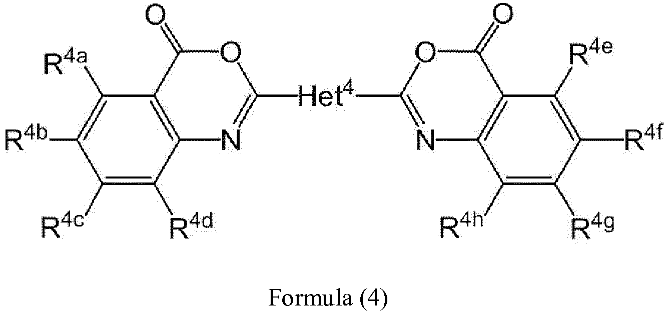
   In Formula (4), Het⁴ is the same as Het³ in Formula (3).
   R^{4a}, R^{4b}, R^{4c}, R^{4d}, R^{4e}, R^{4f}, R^{4g}, and R^{4h} are the same as R^{3a}, R^{3b}, R^{3c}, R^{3d}, R^{3e}, R^{3f}, R^{3g}, and R^{3h} in Formula (3), respectively.
<9> The resin molded body according to <8>, in which the compound represented by Formula (4) is a compound represented by Formula (5). 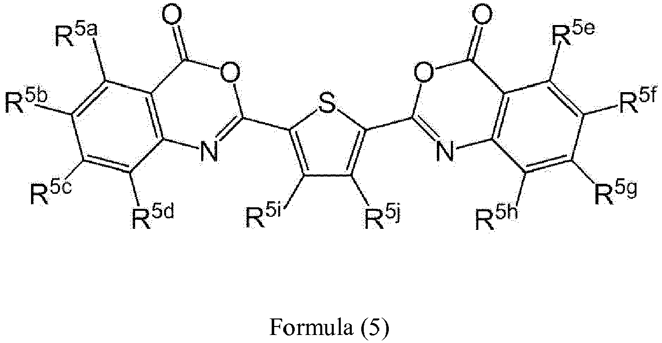
   In Formula (5), R^{5a}, R^{5b}, R^{5c}, R^{5d}, R^{5e}, R^{5f}, R^{5g}, and R^{5h} are the same as R^{4a}, R^{4b}, R^{4c}, R^{4d}, R^{4e}, R^{4f}, R^{4g}, and R^{4h} in Formula (4), respectively.
   R⁵ⁱ and R^{5j} each independently represent a hydrogen atom or a monovalent substituent.
<10> The resin molded body according to any one of <1> to <9> that is a spectacle lens.
<11> The resin molded body according to any one of <1> to <9> that is a resin film.
<12> A blue light cut laminate comprising: a transparent base material; a pressure sensitive adhesive layer provided on at least one surface of the transparent base material; and the resin film according to <11> that is provided on a surface of the pressure sensitive adhesive layer opposite to a surface in contact with the transparent base material.

According to one embodiment of the present invention, it is possible to provide a resin molded body in which the long wavelength ultraviolet ray and blue light blocking properties are good, even in a case of being used for a long period of time, an increase in haze due to the leaching of an ultraviolet absorber is suppressed, and the long wavelength ultraviolet ray and blue light blocking properties are maintained.

According to another embodiment of the present invention, it is possible to provide a blue light cut laminate in which even in a case of being used for a long period of time, an increase in haze due to the leaching of an ultraviolet absorber is suppressed, and the long wavelength ultraviolet ray and blue light blocking properties are maintained for a long period of time.

### DESCRIPTION OF THE PREFERRED EMBODIMENTS

Hereinafter, the present invention will be described in detail. Although the description of the configuration requirements described below may be made based on representative embodiments or specific examples, the present invention is not limited to the embodiments as described below.

In the present specification, a numerical range represented using "to" means a range including numerical values described before and after "to" as the lower limit and the upper limit.

In the present specification, the amount of each component in a sheet or composition means, in a case where there are a plurality of substances corresponding to each component in the sheet or composition, the total amount of the plurality of substances present in the sheet or composition unless otherwise specified.

In the numerical ranges that are described stepwise in the present specification, the upper limit or the lower limit described in one numerical range may be replaced with the upper limit or the lower limit in another numerical range described stepwise. In addition, in the numerical range described in the present specification, the upper limit or the lower limit of the numerical range may be replaced with the value shown in the example.

In the present specification, the combination of preferred embodiments is a more preferred embodiment.

In the present specification, "(meth)acryloyl group" refers to either or both of "acryloyl group" and "methacryloyl group", "(meth)acrylate" refers to either or both of "acrylate" and "methacrylate", and "(meth)acryl" refers to either or both of "acryl" or "methacryl".

In the present specification, room temperature means 25 °C unless otherwise specified.

In the present specification, blocking of long wavelength ultraviolet rays and blue light includes not only a case in which long wavelength ultraviolet rays and blue light are completed blocked, but also a case where at least part of long wavelength ultraviolet rays and blue light is blocked through a resin molded body or a blue light cut laminate and the transmittance of the long wavelength ultraviolet rays and blue light is reduced.

In the present specification, long wavelength ultraviolet rays and blue light (ultraviolet rays and the like) refer to light having a wavelength of 400 nm to 420 nm.

### [Resin Molded Body]

A resin molded body according to an embodiment of the present disclosure comprises a resin layer containing a resin and a compound represented by Formula (1) described later (hereinafter, also referred to as a specific ultraviolet absorber), and a protective layer containing at least one substance selected from the group consisting of urethane resin, acrylic resin, and polysiloxane on at least one surface of the resin layer. 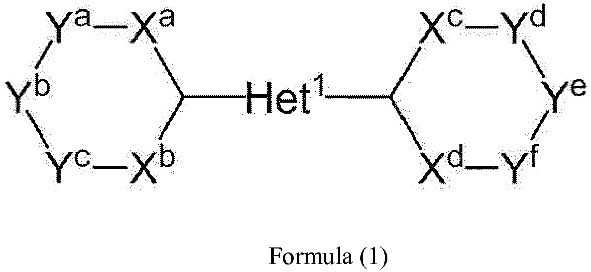
In Formula (1), Het¹ represents a divalent 5-membered or 6-membered aromatic heterocyclic residue.
X^{a}, X^{b}, X^{c}, and X^{d} each independently represent a hetero atom.
Y^{a}, Y^{b}, Y^{c}, Y^{d}, Y^{e}, and Y^{f} each independently represent a hetero atom or a group containing a carbon atom.
A ring bonded to Het¹ may have a double bond at any position.
Hereinafter, a ring formed by X^{a}, X^{b}, Y^{a}, Y^{b}, and Y^{c} bonded to Het¹ is referred to as a ring A, and a ring formed by X^{c}, X^{d}, Y^{d}, Y^{e}, and Y^{f} is referred to as a ring B, respectively.

Hereinafter, the layer structure in the resin molded body and components contained in each layer will be sequentially described.

### <Resin Layer>

The resin layer in the resin molded body according to an embodiment of the present disclosure contains a resin.

### (Resin)

The resin which can be used for the resin layer is not particularly limited and as long as the resin is a resin that can be used as a resin molding material, any resin can be used.

Examples of the resin include polyolefin, poly 4-methylpentene, polyvinyl cyclohexane, polystyrene, a cycloolefin copolymer (COC), acrylic resin, polyvinyl chloride, polyvinylidene chloride, polyvinyl fluoride, polyvinylidene fluoride, polyether, polyacetal, polyamide, polyimide, polyurethane, polyurea, polyester, polycarbonate (PC), phenol resin, melamine resin, cellulose ester, polyvinyl butyral (PVB), ethylene vinyl acetate (EVA), polyether sulfone (PES), polysiloxane, and copolymers thereof.

Among these, thermoplastic resins are preferable from the viewpoint of handleability and moldability.

Examples of thermoplastic resins include polyolefins such as polyethylene, polypropylene, polyisobutylene, poly(1-butene), poly 4-methylpentene, polyvinylcyclohexane, polystyrene, poly(p-methylstyrene), poly(□-methylstyrene), polyisoprene, polybutadiene, polycyclopentene, polynorbornene, polyesters such as polyethylene terephthalate (PET), polyethylene naphthalate (PEN), and polybutylene terephthalate (PBT), poly(meth)acrylic acid esters such as poly(methyl methacrylate) (PMMA), acrylonitrile-butadiene-styrene resin (ABS), an ethylene-vinyl acetate copolymer, ethylene-vinyl alcohol resin, ethylene vinyl acetate resin (EVA), polyether sulfone resin (PES), liquid crystal polyester resin (LCP), polyacetal resin (POM), polyamide (PA), polycarbonate (PC), polyurethane, and polyphenylene sulfide resin (PPS).

In a case where the resin molded body is used as, for example, a spectacle lens, blue light cut laminate, or the like, it is preferable that the resin is transparent, that is, the light transmittance is high.

In the present specification, the resin molded body being transparent means that the average transmittance of the resin molded body at 430 nm to 700 nm is 80% or more and all the transmittances in a wavelength range of 430 nm to 700 nm are 75% or more. The average transmittance at 430 nm to 700 nm is preferably 85% or more and more preferably 90% or more.

The average transmittance of the resin molded body at a 430 nm to 700 nm can be obtained by measuring the spectral spectrum of the resin molded body using a UV/vis spectrometer, for example, UV/vis spectrometer UV3100, manufactured by Shimadzu Corporation and calculating the average value of measurement results of the transmittance per 1 nm wavelength in the above wavelength range. In addition, in a case where the each measurement result of the transmittance per 1 nm wavelength is 75% or more, it can be confirmed that the condition that all the transmittances in a wavelength range of 430 nm to 700 nm are 75% or more is satisfied.

The resin molded body has a resin layer containing a resin and a compound represented by Formula (1) described in detail below. The compound represented by Formula (1) has almost no absorption in the visible light wavelength range. Therefore, the haze of the resin contained in the resin layer can be confirmed by measuring the transmittance and the average transmittance of each wavelength of 430 nm to 700 nm of the resin molded body, and the effect of suppressing an increase in the haze of the resin contained in the resin layer due to the leaching of the ultraviolet absorber described later can be confirmed.

Examples of suitable resins to be used in the transparent resin molded body include cellulose esters such as diacetyl cellulose, triacetyl cellulose, propionyl cellulose, butyryl cellulose, acetyl propionyl cellulose, and nitrocellulose, polystyrenes such as PA, PC, PET, PEN, PBT, poly-1,4-cyclohexanedimethylene terephthalate, polyethylene-1,2-diphenoxyethane-4,4'-dicarboxylate, an dsyndiotactic polystyrene, polyolefins such as polyethylene, polypropylene and polymethylpentene, acrylic resins such as PMMA, polysulfone, polyethersulfone, polyvinyl butyral, ethylene vinyl acetate, polyether ketone, polyether imides, and polyoxyethylene.

Among these, cellulose esters, PC, polyesters, polyolefins and acrylic resins are preferable, and PC and polyesters are more preferable.

In a case where the resin molded body according to the embodiment of the present disclosure is applied to a spectacle lens, t is preferable to select and use a resin having a high refractive index as a resin for a spectacle lens. The resin for a spectacle lens may be a thermoplastic resin or a thermosetting resin as long as the resin satisfies the physical properties such as transparency, refractive index, workability, and strength after curing required for a spectacle lens.

Generally, the refractive index of the resin can be further increased by introducing a halogen atom other than a fluorine atom, an aromatic ring, a sulfur atom or the like into the resin material.

As a thermoplastic resin that can be used for formation of a spectacle lens, 1 or more resins selected from acrylic resins such as PC and PMMA, and the like may be used.

The thermoplastic resin for a spectacle lens may be a commercially available product. Examples of commercially available products include a polycarbonate resin composition (CALIBER 200-13: trade name, Sumitomo Dow Co., Ltd.), a diethylene glycol bisallyl carbonate resin (CR-39: trade name, manufactured by PPG Industries), and the like.

The resin layer may contain only one resin and may contain two or more resins. In a case where the resin layer contains two or more resins, the resins may be contained in the form of a polymer blend or a polymer alloy.

The resin layer in the resin molded body according to the embodiment of the present disclosure includes a compound (specific ultraviolet absorber) represented by Formula (1).

### (Compound Represented by Formula (1))

Hereinafter, the compound represented by Formula (1) will be described. The compound represented by Formula (1) contained in the resin layer is an ultraviolet absorbing compound and is excellent in light absorptivity at a wavelength of 400 nm to 420 nm, that is, the blocking properties with respect to light having a wavelength of 400 nm to 420 nm.

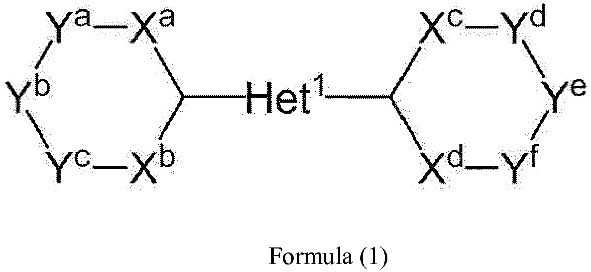

In Formula (1), Het¹ represents a divalent 5-membered or 6-membered aromatic heterocyclic residue having at least one hetero atom. In addition, the 5-membered or 6-membered aromatic heterocyclic residue in Het¹ may be condensed.

Examples of the hetero atom contained in Het¹ include a boron atom, a nitrogen atom, an oxygen atom, a silicon atom, a phosphorus atom, a sulfur atom, a selenium atom, and a tellurium atom. As the hetero atom contained in Het¹, a nitrogen atom, an oxygen atom, or a sulfur atom is preferable, a nitrogen atom or a sulfur atom is more preferable, and a a sulfur atom is even more preferable. Het¹ may have two or more hetero atoms and a plurality of hetero atoms may be the same or different atoms.

The two hydrogen atoms in any position of the 5- or 6-membered aromatic heterocyclic ring are removed to form a divalent aromatic heterocyclic residue represented by Het¹ and the group is bonded to two ring structures in Formula (1).

Examples of aromatic heterocyclic ring in which two hydrogen atoms are bonded to the divalent aromatic heterocyclic residue represented by Het¹ include pyrrole, pyrazole, imidazole, 1,2,3-triazole, 1,2,4-triazole, pyridine, pyridazine, pyrimidine, pyrazine, 1,3,5-triazine, furan, thiophene, oxazole, isoxazole, thiazole, isothiazole, 1,2,3-oxadiazole, and 1,3,4-thiadiazole. As the aromatic heterocyclic ring, pyrrole, pyridine, furan or thiophene is preferable, pyridine or thiophene is more preferable, and thiophene is even more preferable.

The position at which two hydrogen atoms are removed in the aromatic heterocyclic ring described above, that is, the positions to be bonded to the ring A and the ring B may be any position.

For example, in a case where the heterocyclic ring represented by Het¹ is pyrrole as a hetero 5-membered ring compound, the positions to be bonded to the ring A and the ring B from which two hydrogen atoms are removed may be 2- and 3-positions, 2- and 4-positions, 2- and 5-positions, 3- and 4-positions, and 3- and 5-positions. In addition, the bonding positions in a case of thiophene as the hetero 5-membered ring compound includes 2- and 3-positions, 2- and 4-positions, 2- and 5-positions, 3- and 4-positions, and 3- and 5-positions.

Among these, 2- and 5-positions, 2- and 4-positions, and 3- and 4-positions are preferable, 2- and 5-positions and 3- and 4-positions are more preferable, and 2- and 5-positions are even more preferable.

In a case where the heterocyclic ring represented by Het¹ is pyridine as a hetero 6-membered ring compound, the positions to be bonded to the ring A and the ring B may be 2- and 3-positions, 2- and 4-positions, 2- and 5-positions, 2- and 6-positions, 3- and 4-positions, 3- and 5-positions, and 3- and 6-positions. Among these, 2- and 5-positions, 2- and 6-positions, and 3- and 5-positions, are preferable, 2- and 5-positions and 2- and 6-positions are more preferable, and 2- and 5-positions are even more preferable.

The heterocyclic ring residue represented by Het¹ may further have a substituent.

The substituent which can be introduced into the heterocyclic ring represented by Het¹ may be a monovalent substituent, and specific examples thereof include a halogen atom (for example, fluorine atom, chlorine atom, bromine atom, or iodine atom), an alkyl group having a carbon number of 1 to 20 (for example, methyl, or ethyl), an aryl group having a carbon number of 6 to 20 (for example, phenyl or naphthyl), a cyano group, a carboxyl group, an alkoxycarbonyl group (for example, methoxycarbonyl), an aryloxycarbonyl group (for example, phenoxycarbonyl), a substituted or unsubstituted carbamoyl group (for example, carbamoyl, N-phenylcarbamoyl, or N,N-dimethylcarbamoyl), an alkylcarbonyl group (for example, acetyl), an arylcarbonyl group (for example, benzoyl), a nitro group, a substituted or unsubstituted amino group (for example, amino, dimethylamino, or anilino), an acylamino group (for example, acetamide, or ethoxycarbonylamino), a sulfonamido group (for example, methanesulfonamido), an imide group (for example, succinimide, or phthalimide), an imino group (for example, benzylideneamino), a hydroxy group, an alkoxy group having a carbon number of 1 to 20 (for example, methoxy), an aryloxy group (for example, phenoxy), an acyloxy group (for example, acetoxy), an alkylsulfonyloxy group (for example, methanesulfonyloxy), an arylsulfonyloxy group (for example, benzenesulfonyloxy), a sulfo group, a substituted or unsubstituted sulfamoyl group (for example, sulfamoyl, or N-phenylsulfamoyl), an alkylthio group (for example, methylthio), an arylthio group (for example, phenylthio), an alkylsulfonyl group (for example, methanesulfonyl), an arylsulfonyl group (for example, benzenesulfonyl), and a heterocyclic group having a carbon number of 6 to 20 (for example, pyridyl, or morpholino).

The substituents described above may further have a substituent.

In a case where the heterocyclic ring represented by Het¹ has a plurality of monovalent substituents, the plurality of monovalent substituents may be the same or different from each other.

Examples of the substituent which can be further introduced into the monovalent substituent are the same as the examples of the monovalent substituent described above. In addition, in the case where the heterocyclic ring has a plurality of substituents, the plurality of substituents may be bonded to each other to form a ring.

As the monovalent substituent which can be further introduced into the heterocyclic ring represented by Het¹, a substituent selected from an alkyl group, an alkoxy group, and an aryl group is preferable, an alkyl group and an aryl group are more preferable, and an alkyl group is even more preferable.

X^{a}, X^{b}, X^{c}, and X^{d} each independently represents a hetero atom. Examples of the hetero atom in X^{a}, X^{b}, X^{c}, and X^{d} include a boron atom, a nitrogen atom, an oxygen atom, a silicon atom, a phosphorus atom, a sulfur atom, a selenium atom, and a tellurium atom. As the hetero atom, a nitrogen atom, an oxygen atom, and a sulfur atom are preferable, and a nitrogen atom and an oxygen atom are more preferable. Further, each of X^{a}, X^{b}, X^{c}, and X^{d} may have further a substituent. Examples of the substituent which can be introduced into X^{a}, X^{b}, X^{c}, and X^{d} include the same substituents exemplified as the monovalent substituent which can be introduced into Het¹ described above.

Y^{a}, Y^{b}, Y^{c}, Y^{d}, Y^{e}, and Y^{f} each independently represent a hetero atom or a group containing a carbon atom.

In a case where Y^{a}, Y^{b}, Y^{c}, Y^{d}, Y^{e}, and Y^{f} each independently represent a hetero atom, examples of the hetero atom include a nitrogen atom, an oxygen atom, and a sulfur atom.

As Y^{a}, Y^{b}, Y^{c}, Y^{d}, Y^{e}, and Y^{f}, a group containing a carbon atom, a nitrogen atom and an oxygen atom are preferable, a group containing a carbon atom and a nitrogen atom are more preferable, and a carbon atom is even more preferable. Among these, it is still even more preferable that all of Y^{a}, Y^{b}, Y^{c}, Y^{d}, Y^{e}, and Y^{f} represent a carbon atom or a group containing a carbon atom.

In addition, the group containing a carbon atom or the hetero atom as Y^{a}, Y^{b}, Y^{c}, Y^{d}, Y^{e}, and Y^{f} may further have a substituent, and in a case where the group containing a carbon atom or the hetero atom has a plurality of substituents, the substituents may be bonded to each other to form a ring, and may further have a condensed ring structure. Examples of the substituent which can be introduced into Y^{a}, Y^{b}, Y^{c}, Y^{d}, Y^{e}, and Y^{f} include the same substituents exemplified as the monovalent substituent which can be introduced into Het¹ described above.

The ring A formed by X^{a}, X^{b}, Y^{a}, Y^{b}, and Y^{c} and the ring B formed by X^{c}, X^{d}, Y^{d}, Y^{e}, and Y^{f} may each have a double bond at any position.

It is preferable that at least one of the ring A or the ring B has a condensed ring structure. In addition, it is preferable that at least one of the ring A or the ring B is not a pyrimidine ring.

As compound represented by Formula (1) which can be used for the resin layer in the present disclosure, the following compound (A), compound (B), and compound (C) can be used. However, the compound represented by Formula (1) in the present disclosure is not limited to the following specific examples.

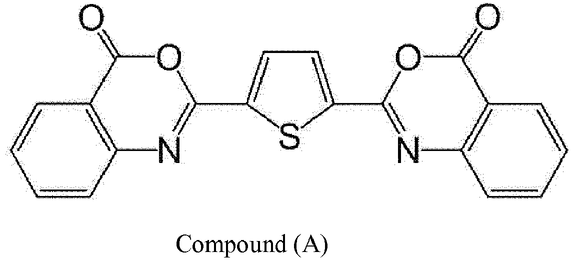

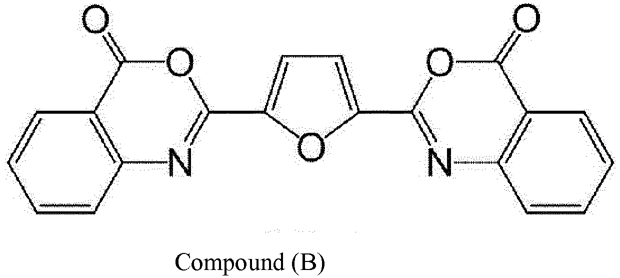

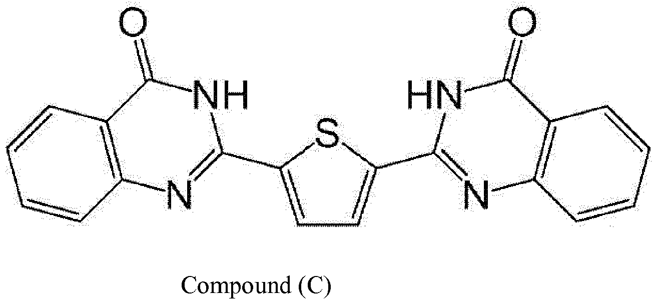

Examples of the compound represented by Formula (1) include compounds described in paragraphs [0046] to [0051] of JP2010-132846A, and the compound group described in the publication can be applied to the resin layer in the present disclosure.

The method of synthesizing the compound represented by Formula (1) or the like is also described in detail in JP2010-132846A, and these contents can be applied to the present disclosure.

The compound represented by Formula (1) is preferably a compound represented by Formula (2).

Hereinafter, the compound represented by Formula (2) will be described.

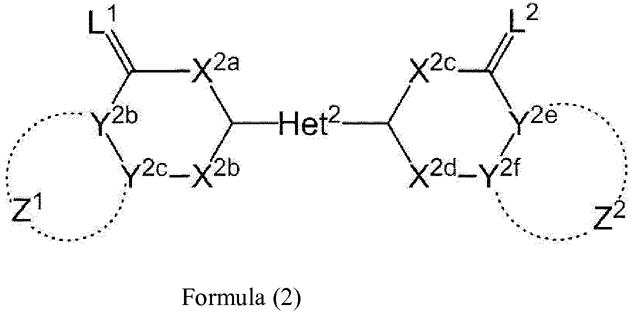

Het² in Formula (2) is the same as Het¹ in Formula (1) and the preferable aspects thereof are also the same.

X^{2a}, X^{2b}, X^{2c}, and X^{2d} in Formula (2) are the same as X^{a}, X^{b}, X^{c}, and X^{d} in Formula (1), respectively, and preferable examples thereof are also the same.

X^{2a}, X^{2b}, X^{2c}, and X^{2d} may be the same or different from each other. However, it is preferable that X^{2a} and X^{2b}, and X^{2c} and X^{2d} are each a combination of the same atoms, and it is more preferable that X^{2a} and X^{2c} represent an oxygen atom and X^{2b} and X^{2d} represent a nitrogen atom.

Y^{2b}, Y^{2c}, Y^{2e}, and Y^{2f} in Formula (2) are the same as Y^{b}, Y^{c}, Y^{e}, and Y^{f} in Formula (1), respectively, and the preferable aspects thereof are also the same.

L¹ and L² each independently represent an oxygen atom, a sulfur atom or NR^{a}, and R^{a} represents a hydrogen atom or a monovalent substituent.

Examples of the monovalent substituent in Formula (2) are the same as the examples of the monovalent substituent mentioned as the substituent which can be introduced into Het¹ described above.

L¹ and L² preferably represent an oxygen atom or NR^{a}, and more preferably represent an oxygen atom. L¹ and L² may be different from each other but are preferably the same. Among these, both L¹ and L² preferably represent an oxygen atom.

Z¹ and Z² each independently represent an atomic group required to form a 4-membered to 8-membered ring by bonding to Y^{2b} and Y^{2c}, or Y^{2e} and Y^{2f}. The formed 4-membered to 8-membered ring may further have a substituent, and may have a condensed ring structure.

Examples of the formed 4-membered to 8-membered ring include aliphatic hydrocarbon rings such as cyclohexane and cyclopentane, aromatic hydrocarbon rings such as benzene and naphthalene, and heterocyclic rings such as pyridine, pyrrole, pyridazine, thiophene, imidazole, furan, pyrazole, oxazole, triazole, thiazole, or benzo-condensed rings thereof, and the like.

Among these, aromatic hydrocarbon rings or heterocyclic rings are preferable, aromatic hydrocarbon rings are more preferable, and a benzene ring is even more preferable.

The compound represented by Formula (2) is preferably a compound represented by Formula (3).

Hereinafter, the compound represented by Formula (3) will be described in detail.

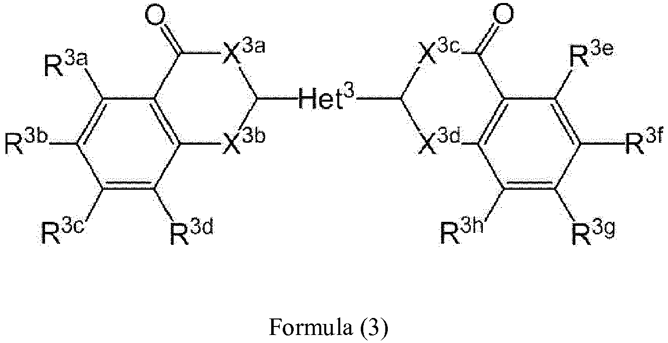

Het³ in Formula (3) is the same as Het² in Formula (2) and the preferable aspects thereof are also the same.

X^{3a}, X^{3b}, X^{3c}, and X^{3d} in Formula (3) are the same as X^{2a}, X^{2b}, X^{2c}, and X^{2d} in Formula (2), respectively, and the preferable aspects thereof are also the same. X^{3a}, X^{3b}, X^{3c}, and X^{3d} may be different from each other or may be the same. It is preferable that X^{3a} and X^{3b}, and X^{3c} and X^{3d} are each a combination of the same atoms, and it is more preferable that X^{3a} and X^{3c} represent an oxygen atom and X^{3b} and X^{3d} represent a nitrogen atom.

R^{3a}, R^{3b}, R^{3c}, R^{3d}, R^{3e}, R^{3f}, R^{3g}, and R^{3h} each independently represent a hydrogen atom or a monovalent substituent. Examples of the monovalent substituent in a case where R^{3a}, R^{3b}, R^{3c}, R^{3d}, R^{3e}, R^{3f}, R^{3g}, and R^{3h} each independently represent a monovalent substituent are the same as the examples of the monovalent substituent which can be introduced into Het¹ described above.

Any two substituent groups among R^{3a}, R^{3b}, R^{3c}, and R^{3d}, and R^{3e}, R^{3f}, R^{3g}, and R^{3h} may be bonded to each other to form a ring and may further have a condensed ring structure.

R^{3a}, R^{3b}, R^{3c}, R^{3d}, R^{3e} , R^{3f}, R^{3g}, and R^{3h} each preferably represent a hydrogen atom, an alkyl group having 10 or less carbon atoms, an alkoxy group having 10 or less carbon atoms, or a hydroxy group, more preferably represent a hydrogen atom or an alkoxy group having 10 or less carbon atoms, and even more preferably a hydrogen atom. Particularly preferably, R^{3a} to R^{3h} are all hydrogen atoms.

Further, the compound represented by Formula (3) is preferably a compound represented by Formula (4).

Hereinafter, the compound represented by Formula (4) is described in detail.

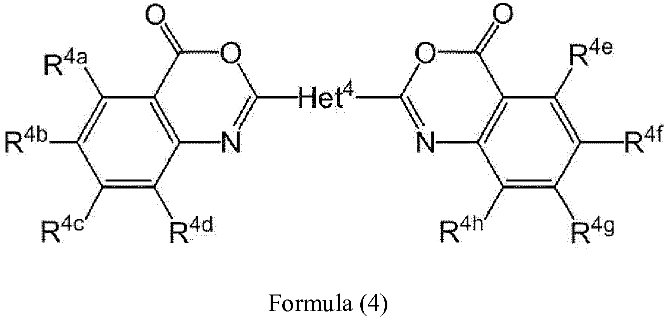

Het⁴ in Formula (4) is the same as Het³ in Formula (3) and the preferable aspect thereof are also the same.

R^{4a}, R^{4b}, R^{4c}, R^{4d}, R^{4e}, R^{4f}, R^{4g}, and R^{4h} in Formula (4) are the same as R^{3a}, R^{3b}, R^{3c}, R^{3d}, R^{3e}, R^{3f}, R^{3g}, and R^{3h} in Formula (3), respectively, and the preferable aspect thereof are also the same.

The compound represented by Formula (4) is preferably a compound represented by Formula (5).

Hereinafter, the compound represented by Formula (5) is described in detail.

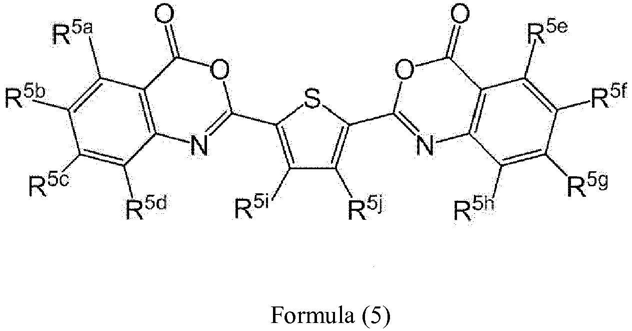

Het⁵ in Formula (5) is the same as Het⁴ in Formula (4) and the preferable aspect thereof are also the same.

R^{5a}, R^{5b}, R^{5c}, R^{5d}, R^{5e}, R^{5f}, R^{5g}, and R^{5h} in Formula (5) are the same as R^{4a}, R^{4b}, R^{4c}, R^{4d}, R^{4e}, R^{4f}, R^{4g}, and R^{4h} in Formula (4), respectively, and the preferable aspect thereof are also the same.

R⁵ⁱ and R^{5j} each independently represent a hydrogen atom or a monovalent substituent. Examples of the monovalent substituent group in a case where R⁵ⁱ and R^{5j} each independently represent a monovalent substituent are the same as the examples of the monovalent substituent which can be introduced into Het¹ described above.

R⁵ⁱ and R^{5j} may be bonded to each other to form a ring and may further have a condensed ring structure. R⁵ⁱ and R^{5j} each preferably represent a hydrogen atom, an alkyl group having 10 or less carbon atoms, an alkoxy group having 10 or less carbon atoms, or a hydroxy group, and more preferably represent a hydrogen atom or an alkoxy group having 10 or less carbon atoms. Even more preferably, R⁵ⁱ and R^{5j} each represent a hydrogen atom, and particularly preferably, both R⁵ⁱ and R^{5j} are a hydrogen atom.

Specific examples of the compound represented by any one of Formulae (1) to (5), which can be used for the resin layer according to the embodiment of the present disclosure, include compounds described in paragraphs [0070] to [0075] of JP2010-132846A. However, the compound represented by Formula (1) is not limited to the examples of the compounds described in the above publication.

The compound represented by any one of Formulae (1) to (5) may have tautomers depending on the structure and the environment where the compound is placed. For the resin layer in the embodiment of the present disclosure, tautomers of these already described resins can also be used.

For example, the compound represented by Formula (1) preferably has a light transmittance of 5% or less at a wavelength of 410 nm and a light transmittance of 80% or more at a wavelength of 440 nm. It is more preferable that the light transmittance at a wavelength of 410 nm is 4% or less and the light transmittance at a wavelength of 440 nm is 80% or more, it is even more preferable that the light transmittance at a wavelength of 410 nm is 3% or less and the light transmittance at a wavelength of 440 nm is 80% or more, and it is most preferable that the light transmittance at a wavelength of 410 nm is 2% or less and the light transmittance at a wavelength of 440 nm is 80% or more.

The light transmittance of the compound represented by Formula (1) can be measured by the same method as described above.

The resin layer contains the resin described above and the compound represented by Formula (1). The resin layer may contain only one compound represented by Formula (1) or may contain two or more compounds represented by Formula (1).

The content of the compound represented by Formula (1) in the resin layer is preferably more than 0% by mass and 5% by mass or less, more preferably 0.1% by mass to 4% by mass, and even more preferably 0.3% by mass to 3% by mass with respect to the total amount of the resin layer.

### (Other Components)

The resin layer in the embodiment of the present disclosure may contain other components in addition to the above-described resin and the above-described specific ultraviolet absorber within the range not imparting the effect.

Examples of other components which may be contained in the resin layer include a filler, a plasticizer, a surfactant such as a nonionic surfactant, a cationic surfactant, or an anionic surfactant, an adhesion promoter, an antioxidant, an aggregation preventing agent, an ultraviolet absorber other than the specific ultraviolet absorber, and a coloring agent.

Since the resin layer contains an ultraviolet absorber other than the specific ultraviolet absorber, a coloring agent, and the like, the shorter wavelength ultraviolet blocking properties can be imparted to the resin layer, eventually, to the resin molded body. In addition, since the resin layer contains a coloring agent, it is possible to impart any color to the resin molded body.

### (Formation of Resin Layer)

The resin layer in the embodiment of the present disclosure can be obtained by mixing the above-described resin and the specific ultraviolet absorber by heating to the melting temperature of the resin and molding the mixture into a sheet having a desired thickness.

For example, first, in a case of using a thermoplastic resin as the resin, the pellets of the thermoplastic resin are dried in advance, the specific ultraviolet absorber is mixed, and the obtained mixture is put into an extruder, heated, and melt-kneaded to obtain pellets (masterbatch) containing the specific ultraviolet absorber.

Thereafter, the pellets of the thermoplastic resin are mixed with the obtained masterbatch in such an amount that the content of the specific ultraviolet absorber is the desired content, and the mixture is further melt-kneaded in the melt extruder and is molded into a film through a die. Thus, a resin layer can be obtained.

### <Protective Layer>

The protective layer in the resin molded body in the embodiment of the present disclosure contains at least one substance selected from the group consisting of urethane resin, acrylic resin, and polysiloxane.

Although the action in the resin molded body according to the embodiment of the present disclosure is not clear, it is considered as follows.

Since the urethane resin and the acrylic resin contained in the protective layer has good compatibility with the specific ultraviolet absorber contained in the resin layer, and the urethane resin and the acrylic resin effectively capture the specific ultraviolet absorber leached from the resin layer in the protective layer, it is considered to effectively suppress the leaching of the specific ultraviolet absorber.

On the other hand, since polysiloxane has low compatibility with the specific ultraviolet absorber, it is considered that the protective layer containing polysiloxane effectively blocks the leaching of the specific ultraviolet absorber by containing polysiloxane in the protective layer.

Therefore, it is considered that by the presence of the above-mentioned protective layer in the resin molded body according to the embodiment of the present disclosure, even in a case where the molded body is used for a long period of time or in a high humidity and heat environment, the leaching of the specific ultraviolet absorber from the resin layer is effectively suppressed, and as a result, a reduction in haze in the resin layer is suppressed.

The present disclosure is not limited to the above estimation mechanism.

It is preferable that the protective layer contains a urethane resin or an acrylic resin, and the solubility parameter (hereinafter, also referred to as a SP value) of the protective layer calculated by the Fedors method is in a range of 20 (J/cm³)^{1/2} to 28 (J/cm³)^{1/2}.

Hereinafter, a protective layer containing a urethane resin or an acrylic resin may be referred to as a protective layer (A).

For the SP value in the present specification, a value calculated by the Fedors method is used. The Fedors method is described in Table 7.4 in Properties of Polymer (ELSEVIER SCIENTIFIC PUBLISHING COMPANY, 1976) by D. W. VAN CREVELEN, and the SP value can be calculated according to the description of the document.

The SP value of the protective layer described above is the standard of the compatibility with the specific ultraviolet absorber contained in the resin layer. In the above preferable range of the SP value of the protective layer, the effect of capturing the specific ultraviolet absorber in the protective layer is improved and thus the effect of suppressing the leaching of the specific ultraviolet absorber is further improved.

The protective layer (A) containing a urethane resin or an acrylic resin preferably comprises an antireflection layer on the surface opposite to the surface in contact with the resin layer.

By further providing an antireflection layer on the surface of the protective layer, the leaching of the compound represented by Formula (1) is further suppressed, and the effect of suppressing an increase in haze of the obtained resin molded body is further improved.

The antireflection layer is not particularly limited. In the consideration of the use of the resin molded body, a highly transparent antireflection layer is preferable. Here, the highly transparent antireflection layer means that the average transmittance of the antireflection layer at 430 nm to 700 nm is 80% or more and each transmittance in the wavelength range is 75% or more. The average transmittance in a wavelength range of 430 nm to 700 nm can be obtained by the same method as the method of measuring the average transmittance of the resin molded body at 430 nm to 700 nm described above.

For example, a known antireflection layer of silica, alumina, or the like may be formed on the surface of the protective layer by coating or vacuum deposition, or the antireflection layer may be formed by applying an antireflection layer forming composition containing antireflection particles such as silica and plastic beads to the resin. Further, a layer containing flat metal particles such as palladium, gold, and silver may be formed by coating.

The antireflection layer is described in detail in paragraphs [0036] to [0038] of JP2006-289627A and paragraphs [0010] to [0026] of JP2015-129909A, and the descriptions can also be applied to the resin molded body according to the embodiment of the present disclosure.

The protective layer (A) can be formed by a known method.

For example, a resin layer (A) can be formed by preparing a coating solution for forming a protective layer (A) containing a monomer to be a precursor of urethane resin or acrylic resin, a solvent, and a polymerization catalyst or a polymerization initiator, applying the coating solution to the surface of the above-described resin layer, drying and curing the coating solution.

In addition, the protective layer (A) molded into a film can be transferred to the resin layer described above by using the coating solution for forming a protective layer (A).

From the viewpoint of simplicity of production, and better adhesiveness between the resin layer and the protective layer (A), a coating method is preferable.

The details of the method of forming the protective layer (A) will be described later.

As a polymerizable monomer that can be used to form the protective layer (A), a polyfunctional monomer having two or more polymerizable groups is preferable from the viewpoint of further improvement in the mechanical strength of the protective layer (A). The polyfunctional monomer acts as a so-called crosslinking agent.

The number of polymerizable groups contained in the polyfunctional monomer is not particularly limited, and is preferably 2 to 10, and from the viewpoint of better mechanical strength and handleability, more preferably 2 to 6.

Examples of the polyfunctional monomer include trimethylolpropane triacrylate, tetramethylolmethane tetraacrylate, dipentaerythritol hexaacrylate, and pentaerythritol tetraacrylate.

Commercial products can be used as such a polyfunctional monomer, and specifically, for example, as dipentaerythritol hexaacrylate, A-DPH (manufactured by Shin-Nakamura Chemical Co., Ltd.) can be used.

As the urethane resin used as the protective layer (A), in addition to general urethane resins, a urethane resin obtained by subjecting a urethane resin obtained by the reaction of a diisocyanate and a polyol to a chain extension treatment to increase the molecular weight can be used.

As the diisocyanate which can be used for the synthesis of urethane resin, toluene diisocyanate (TDI), diphenylmethane diisocyanate (MDI), naphthalene diisocyanate (NDI), tolidine diisocyanate (TODI), hexamethylene diisocyanate (HDI), isophorone isocyanate (IPDI), and the like can be used.

As the polyol which can be used for the synthesis of urethane resin, ethylene glycol, propylene glycol, glycerin, hexanetriol, and the like may be used.

The diisocyanate, the polyol, and the chain extension treatment are described in detail in, for example, "Polyurethane Resin Handbook" (IWATA, Keiji, Nikkan Kogyo Shimbun, 1987), and the descriptions of urethane resin and its raw materials described in "Polyurethane Handbook" can be applied to the present invention depending on the purpose.

As the raw material resin of the protective layer, commercially available urethane resins may be used. Examples of commercial products include SUPERFLEX (registered trademark) 470, 210, 150HS, and 150HF, and ELASTRON (registered trademark) H-3 (all manufactured by DKS Co. Ltd.), HYDRAN (registered trademark) AP-20, AP-40F, and WLS-210 (all manufactured by DIC Corporation), TAKELAC (registered trademark) W-6061, WS-5100, WS-4000, and WSA-5920, and OLESTER (registered trademark) UD-350 (all manufactured by Mitsui Chemicals, Inc.).

Among these, from the viewpoint of containing a silanol group, WS-5100 and WS-4000 are particularly preferable.

### (Curing of Protective Layer)

In a case of forming the protective layer, in particular, the protective layer (A), a curable composition for forming the protective layer (A) is used. After the composition for forming the protective layer (A) is applied to the surface of the above-described resin layer to form a layer of the composition for forming a protective layer (A), the composition is cured by applying energy to form a protective layer. In the application of energy, energy suitable for the polymerization initiator contained in the composition for forming a protective layer (A) may be applied. That is, in a case where the polymerization initiator contained in the composition for forming a protective layer (A) is a photopolymerization initiator, exposure is performed, and in a case where the polymerization initiator contained in the composition is a thermal polymerization initiator, the layer of the composition for forming a protective layer (A) is cured by heating so that the protective layer (A) can be obtained. Among these, from the viewpoint of curing rate and workability, as the curing method of the protective layer, light irradiation is preferable and ultraviolet irradiation is more preferable.

For example, it is preferable to reduce the amount of the solvent by drying the solvent contained in the composition for forming a protective layer (A) in advance before irradiating the layer of the composition for forming a protective layer (A) with light from the viewpoint of improvement of curability.

In a case of performing drying, known methods such as a method of blowing warm air, a method of passing through a drying zone controlled to a predetermined temperature, and a method of drying with a heater provided on a transport roll may be used. The drying temperature is not particularly limited and can be appropriately selected in consideration of the formulation of the composition for forming a protective layer (A). Usually, the composition layer for forming a protective layer (A) can be dried, for example, at 50°C to 70°C.

In a case where the protective layer is formed by photocuring by light irradiation as energy application, energy can be applied using, for example, an ultraviolet lamp.

The light irradiation amount is preferably in a range of 10 mJ/cm² to 1000 mJ/cm². Curing is suitably performed by irradiating the protective layer with ultraviolet rays with the above-described irradiation amount.

In a case of performing ultraviolet irradiation, in order to suppress the curing inhibition by oxygen and to further promote the surface curing of the protective layer, the ultraviolet irradiation area (hereinafter, also referred to as a curing zone) may be purged with an inert gas such as nitrogen gas to reduce the oxygen concentration. The oxygen concentration in a case of reducing the oxygen concentration in the curing zone is preferably 0.01% to 5%.

In order to promote the curing reaction of the curable composition layer for forming a protective layer (A), the temperature in the curing zone can be increased. From the viewpoint of promoting the curing reaction, the temperature in the curing zone is preferably 25°C to 100°C, more preferably 30°C to 80°C, and even more preferably 40°C to 70°C.

A protective layer (hereinafter, also referred to as protective layer (B)) containing a polysiloxane can be produced by a sol-gel method using a siloxane compound.

The protective layer (B) preferably contains at least one compound obtained by a condensation reaction of siloxane oligomers.

As the siloxane oligomer in the present disclosure, a partial hydrolysis-condensation product obtained using one silane compound, and a partial cohydrolysis-condensation product obtained using two or more silane compounds can be used. The silane compound is a compound having a hydrolyzable silyl group and/or a silanol group. The silyl group is hydrolyzed to form a silanol group, and the silanol group is dehydrated and condensed to form a siloxane bond.

As such a partial (co)hydrolysis-condensation product, compounds commercially available as silicone alkoxy oligomers may be used (for example, those commercially available from Shin-Etsu Chemical Co., Ltd.), or ones that are produced in accordance with a standard method by reacting a hydrolyzable silane compound with less than an equivalent of hydrolytic water and then removing by-products such as alcohol and hydrochloric acid may be used.

Commercially available products can be used as the siloxane compound.

Examples of commercially available products of the siloxane compound include MKC (registered trademark) SILICATE MS51, MKC SILICATE MS56, MKC SILICATE MS57, MKC SILICATE MS56S, MKC METHYL SILICATE 53A, MKC ETHYL SILICATE 40, MKC ETHYL SILICATE 48, and MKCEMS 485, manufactured by Mitsubishi Chemical Corporation.

As the method of forming the protective layer (B), specifically, for example, a method including while stirring an acetic acid aqueous solution which is a reaction catalyst, adding dropwise 3-glycidoxypropyltrimethoxysilane which his a siloxane compound, then adding tetraethoxysilane into the acetic acid aqueous solution under stirring, continuously stirring to allow the reaction of water and siloxane compound to proceed, sequentially adding silica particles, a chelating agent, and a surfactant to be contained as required to prepare a coating solution for forming a protective layer (B), and forming the protective layer (B) using this coating solution may be used.

The coating solution for forming a protective layer (B) obtained as described above is applied to the surface of the resin layer, and cured by heating, and thus the protective layer (B) can be obtained.

### (Other Components)

In the composition for forming a protective layer used to form the protective layer, in addition to the monomer (polymerizable compound) as a precursor of the resin, the polymerization initiators or the reaction catalysts described above, various other components may be contained depending on the purpose as long as the effect of the present disclosure is not impaired.

Examples of other components that may be contained in the composition for forming a protective layer include a solvent, a filler, a non-curable binder resin, a surfactant such as a nonionic surfactant, a cationic surfactant, or an anionic surfactant, an adhesion promoter, a pressure sensitive adhesive, a tackifier, an antioxidant, and an aggregation preventing agent. In addition, in a case where the composition for forming a protective layer contains a polymerization initiator, a sensitizer that improves the sensitivity of the photopolymerization initiator, a light stabilizer that contributes to the stability of the photopolymerization initiator, and a thermal polymerization inhibitor may be contained.

### (Solvent)

In a case where the protective layer is formed by a coating method, the composition for forming a protective layer may contain a solvent.

As the solvent, water, an organic solvent, and a mixture of water and an organic solvent are used. The solvent is preferably selected in consideration of the solubility of each component contained in the composition for forming a protective layer, the dispersibility, the coated surface state of the composition for forming a protective layer, and the ease of handling.

Examples of the organic solvent include esters, ethers, ketones, and aromatic hydrocarbons.

Specific examples of the esters include ethyl acetate, n-butyl acetate, isobutyl acetate, amyl formate, isoamyl acetate, isobutyl acetate, butyl propionate, isopropyl butyrate, ethyl butyrate, butyl butyrate, methyl lactate, ethyl lactate, alkyl oxyacetates (for example, methyl oxyacetate, ethyl oxyacetate, and butyl oxyacetate (specifically, methyl methoxyacetate, ethyl methoxyacetate, butyl methoxyacetate, methyl ethoxyacetate, and ethyl ethoxyacetate)), alkyl 3-oxypropionates (for example, methyl 3-oxy propionate, and ethyl 3-oxy propionate (specifically, methyl 3-methoxypropionate, ethyl 3-methoxypropionate, methyl 3-ethoxypropionate, and ethyl 3-ethoxypropionate)), alkyl 2-oxypropionates (for example, methyl 2-oxypropionate, ethyl 2-oxypropionate, and propyl 2-oxypropionate (specifically, methyl 2-methoxypropionate, ethyl 2-methoxypropionate, propyl 2-methoxypropionate, methyl 2-ethoxypropionate, and ethyl 2-ethoxypropionate)), methyl 2-oxy-2-methylpropionate, ethyl 2-oxy-2-methylpropionate (specifically, methyl 2-methoxy-2-methylpropionate, and ethyl 2-ethoxy-2-methylpropionate), methyl pyruvate, ethyl pyruvate, propyl pyruvate, methyl acetoacetate, ethyl acetoacetate, methyl 2-oxobutanoate, ethyl 2-oxobutanoate, cyclohexyl acetate, and 1-methyl-2-methoxyethyl propionate.

Specific examples of the ethers include diethylene glycol dimethyl ether, tetrahydrofuran, ethylene glycol monomethyl ether, ethylene glycol monoethyl ether, methyl cellosolve acetate, ethyl cellosolve acetate, diethylene glycol monomethyl ether, diethylene glycol monoethyl ether, diethylene glycol monobutyl ether, propylene glycol monomethyl ether, propylene glycol monomethyl ether acetate (hereinafter, also referred to as PEGMEA), diethylene glycol monoethyl ether acetate (hereinafter, also referred to as ethyl carbitol acetate), diethylene glycol monobutyl ether acetate (hereinafter, also referred to as butyl carbitol acetate), propylene glycol monoethyl ether acetate, and propylene glycol monopropyl ether acetate.

Examples of the ketones include methyl ethyl ketone, cyclohexanone, 2-heptanone, and 3-heptanone.

Preferable examples of the aromatic hydrocarbons include toluene and xylene.

These organic solvents may be used alone in the composition for forming a protective layer, or two or more of these organic solvents may be used in combination from the viewpoint of improving the solubility of each component, dispersibility, and coated surface state.

The content of the solvent in a case where the composition for forming a protective layer contains the solvent is preferably such an amount that the total solid concentration in the composition for forming a protective layer 10% by mass to 80% by mass, and more preferably such an amount that the total solid concentration is 15% by mass to 60% by mass.

### (Thickness of Protective Layer)

The thickness of the protective layer is preferably 0.5 µm to 10 µm, more preferably 1 µm to 8 µm, and even more preferably 3 µm to 6 µm.

In the above thickness range of the protective layer, the effect of suppressing the leaching of the compound represented by Formula (1) from the resin layer is further improved.

### (Use of Resin Molded Body)

Since the resin molded body according to the embodiment of the present disclosure is configured as described above, the leaching of the compound represented by Formula (1) contained in the resin layer is suppressed for a long period of time. Therefore, the whitening of the resin molded body due to the leaching of the compound represented by Formula (1), that is, an increase in haze is suppressed, and thus, in a case where the resin molded body is used for a long period of time, it is possible to maintain a transparent appearance and the effect of blocking ultraviolet rays or the like.

Therefore, the resin molded body according to the embodiment of the present disclosure can be suitably used for an image display device, a protective sheet for a display of a small terminal or the like, a spectacle lens, a window film for a construction material, and the like.

### <Spectacle Lens>

The resin molded body according to the embodiment of the present disclosure can be suitably used for, for example, a spectacle lens.

A spectacle lens to which the resin molded body according to the embodiment of the present disclosure is applied has a lens-shaped resin layer, and the above-described protective layer on at least one surface of the resin layer.

The resin molded body as a spectacle lens can be obtained by, first molding the above-described resin layer into a spectacle lens shape, and providing the above-described protective layer on at least one surface of the lens-like resin layer.

In the resin molded body as a spectacle lens, since the spectacle lens contains the compound represented by Formula (1) described above, for example, in a case where a communication terminal, an image display device, or the like is viewed through the spectacle lens, it is possible to reduce the effects of long wavelength ultraviolet rays and blue light on eyes.

In a case where the resin molded body according to the embodiment of the present disclosure is used as a spectacle lens, since the transparency of the resin molded body is good, the additional effect of improving the color reproducibility of images, articles, and the like that are objects to be visually observed is provided.

The protective layer (B) obtained by hydrolyzing and polycondensing a silicon alkoxide compound by using the protective layer (B) containing polysiloxane as the protective layer is preferable in that the adhesiveness with the resin layer, which is the lens base material, is improved and the film hardness is improved. Furthermore, the protective layer (B) formed using a silicon alkoxide compound as a raw material is excellent in the hydrophobicity of the surface and has an advantage that the surface of the spectacle lens is less likely to be stained.

The protective layer (B) containing polysiloxane applicable to the resin molded body according to the embodiment of the present disclosure is described as, for example, a sol-gel film in paragraphs [0042] to [0054] of JP2013-225461A, and by forming a film which does not contain a conductive material described in JP2013-225461A, this film can be applied to the protective layer (B) in the present disclosure.

In the case where the resin molded body according to the embodiment of the present disclosure is applied to a spectacle lens, as the resin contained in the resin layer, it is preferable to use the above-described thermoplastic resin suitable for a spectacle lens.

In a case of producing a spectacle lens using the above-mentioned thermoplastic resin, a spectacle lens-like resin layer can be prepared by molding the resin composition containing the raw material resin and the compound represented by Formula (1) into pellets by using a melt extruder, and applying a known molding method such as an injection molding method using the obtained pellet-like resin.

In a case of producing a spectacle lens using a thermosetting resin, a spectacle lens-like resin layer can be prepared by usually, preparing a resin composition containing a monomer, which is a precursor of the resin, a compound represented by Formula (1), and a polymerization initiator or a crosslinking agent, filling a mold with the obtained resin composition, and heating and curing the composition.

### (Spectacles)

In order to obtain spectacles comprising the spectacle lens to which the resin molded body according to the embodiment of the present disclosure is applied, the above-described spectacle lens may be mounted on a suitable spectacle frame.

Since the resin molded body according to the embodiment of the present disclosure has good blue light blocking properties, it can be expected to reduce eye fatigue in a case where the operation of viewing the display of an image display device is performed for a long period of time.

In addition, even in a case where the resin composition is used for a long period of time, the blue light blocking properties is good due to suppression of an increase in haze, and in a case where an observer views an object with the spectacle lens interposed therebetween, it is difficult to feel a change in the color of the object caused by the interposition of the spectacle lens, and the color reproducibility of the object to be observed also becomes good.

### <Resin Film>

The resin molded body according to the embodiment of the present disclosure can be applied to a resin film.

The resin film to which the resin molded body according to the embodiment of the present disclosure is applied has a film-like resin layer, and the above-described protective layer on one surface of the resin layer. Therefore, the resin film has a shielding effect against ultraviolet rays and can be used as a blue light cut film.

The resin molded body as a resin film can be obtained by first molding the above-described resin layer into a film, and laminating the above-mentioned protective layer on one surface of the film-like resin layer.

The protective layer may be formed by a coating method, or may be formed by transferring a protective layer separately molded into a film to the surface of the resin layer. Among these, the protective layer is preferably formed by a coating method from the viewpoint of simplicity of production and improved adhesiveness with the resin layer. Also, the above-mentioned protective layer (B) is formed by a coating method due to the characteristics.

Since the resin molded body as a resin film is excellent in flexibility and shape followability, the resin molded body can be fixed at any place and used as a protective film for blue light cutting.

### (Use of Resin Film)

A display such as a mobile terminal in which a touch panel is provided on a display, for example, a smartphone or a tablet terminal, has, for example, a cover glass as a transparent member for protecting the touch panel. A retrofit display film may be attached to the surface of the transparent member for various purposes.

The resin film which is a resin molded body according to the embodiment of the present disclosure can be suitably used as a display film. By using the resin film according to the embodiment of the present disclosure as a display film, it is possible to reduce the influence of ultraviolet rays, blue light, and the like on the eyes in a case of viewing the display in a touch panel operation or the like.

The resin film suppresses an increase in haze with time, and the visibility and color reproducibility of an image on the display become good. Also, as apparent from the evaluation in the following examples, since curling is suppressed in the resin molded body according to the embodiment of the present disclosure, the workability in a case where a purchaser of a mobile terminal attaches the resin film according to the embodiment of the present disclosure as a display film to the mobile terminal becomes good.

In a case where the resin molded body according to the embodiment of the present disclosure is used as a resin film, the resin molded body is suitable as a display film used for the purpose of reducing the influence of ultraviolet rays and the like. That is, by providing the resin layer containing the specific ultraviolet absorber excellent in stability and the protective layer, an increase in haze is suppressed even in use a long time, and the excellent ultraviolet absorbing ability is maintained. The resin film can be suitably used as a display film by, for example, disposing a pressure sensitive adhesive layer on a side having the resin layer of the resin film.

In a case where the resin film is applied to a display film, a pressure sensitive adhesive layer may be formed by applying a known pressure sensitive adhesive on the resin layer on the resin layer side.

In the display film, a release film may be provided on the protective layer side of the resin film to prevent contamination. Also, as desired, the above-described antireflection layer may be provided.

For example, the display film is attached to the surface of a transparent member of a mobile terminal or the like with a pressure sensitive adhesive layer interposed therebetween for use.

As the pressure sensitive adhesive layer, the same pressure sensitive adhesive layer as a pressure sensitive adhesive layer in a blue light cut laminate described below can be used and the method of forming the pressure sensitive adhesive layer is also the same.

### <Blue Light Cut Laminate>

A blue light cut laminate according to an embodiment of the present disclosure has a transparent base material, a pressure sensitive adhesive layer provided on at least one surface of the transparent base material, and the resin molded body as a resin film provided on the surface of the pressure sensitive adhesive layer opposite to the surface in contact with the transparent base material. The resin film is preferably provided with the resin layer side in contact with the pressure sensitive adhesive layer.

Since the blue light cut laminate according to the embodiment of the present disclosure has a transparent base material, the blue light cut laminate is more excellent in strength and durability. In addition, since the transparent base material and the resin molded body as a resin film are in close contact with each other with the pressure sensitive adhesive layer interposed therebetween, the resin molded body is stably fixed to the transparent base material and the durability is good. Therefore, the blue light cut laminate can be used for various applications that require a blue light cut function.

### (Transparent Base Material)

The transparent base material which can be used in the blue light cut laminate is not particularly limited and suitable examples thereof include a glass base material and a transparent resin base material.

Examples of the resin which can be used for the transparent base material include polyesters such as polyethylene terephthalate (PET), polyethylene naphthalate (PEN), polybutylene terephthalate (PBT), polycyclohexanedimethylene terephthalate (PCT), polypropylene (PP), polyethylene (PE), polyvinyl chloride (PVA), and tricellulose acetate (TAC). Among these, PET is preferable from the viewpoint of versatility.

In a case of a glass base material, a glass plate having required physical properties can be appropriately selected and used as a transparent base material. In a case of a resin base material, the resin base material can be obtained by molding the above-described resin into a film by a conventional method. In addition, commercially available resin films can be used as the transparent base material.

The thickness of the transparent base material can be selected appropriately according to the purpose of use, such as the application, size, and strength to which blue light cut laminate is applied.

For example, in a case where the blue light cut laminate is used as a protective sheet for an image display device, generally, the thickness is preferably 5 µm to 2500 µm, and more preferably 20 µm to 500 µm.

The transparent base material means an optically transparent support. The base material being transparent means that the average transmittance of the base material at 430 nm to 700 nm is 85% or more, and all the transmittances in a wavelength range of 430 nm to 700 nm are 80% or more. The average transmittance of the transparent base material at 430 nm to 700 nm is preferably 90% or more and more preferably 95% or more. The average transmittance at 430 nm to 700 nm or the like can be obtained by the measurement method in the above-described resin molded body.

The average transmittance of the transparent base material at 430 nm to 700 nm can be obtained by the same method as the measurement method of the average transmittance at 430 nm to 700 nm in the above-described resin molded body.

### (Pressure Sensitive Adhesive Layer)

The blue light cut laminate of this embodiment has an adhesive layer between the above-described resin film and the transparent base material. That is, the pressure sensitive adhesive layer is provided on one surface of the transparent base material, and the resin film is provided on the surface of the pressure sensitive adhesive layer opposite to the surface in contact with the transparent base material. It is preferable that the side having the resin layer of resin molded body, which is a resin film, is disposed on the side in contact with the pressure sensitive adhesive layer.

The kind of the adhesive and the pressure sensitive adhesive used for the pressure sensitive adhesive layer is not particularly limited.

The pressure sensitive adhesive which can be used for the pressure sensitive adhesive layer is not particularly limited, and known pressure sensitive adhesives can be used.

Examples of the pressure sensitive adhesive include an acrylic pressure sensitive adhesive, a rubber-based pressure sensitive adhesive, and a silicone-based pressure sensitive adhesive. The acrylic pressure sensitive adhesive is a pressure sensitive adhesive containing a polymer of (meth)acrylic monomer ((meth)acrylic polymer). In the acrylic pressure sensitive adhesive, as long as the above-described polymer is the main component, that is, for example, as long as the content of the above-described polymer with respect to the total amount of the pressure sensitive adhesive is 50% by mass or more, other components, for example, a tackifier to be described later, a rubber component and the like may be contained.

As the pressure sensitive adhesive, for example, an acrylic pressure sensitive adhesive, an ultraviolet curable pressure sensitive adhesive, a silicone pressure sensitive adhesive, and the like described in "Evaluation of Release Paper·Release Film and Pressure Sensitive Adhesive Tape and Control Technology thereof', Chapter 2, Information mechanism, 2004, may be suitably used in the embodiment.

Examples of the adhesive include a urethane resin adhesive, a polyester adhesive, an acrylic resin adhesive, an ethylene vinyl acetate resin adhesive, a polyvinyl alcohol adhesive, a polyamide adhesive, and a silicone adhesive, and from the viewpoint of higher adhesive strength, a urethane resin adhesive or a silicone adhesive is preferable.

A commercially available product can be used as the adhesive. As a commercially available product, for example, a urethane resin-based adhesive (LIS-073-50U: trade name) manufactured by Toyo Ink Co., Ltd. can be used. The adhesive is also preferably used in combination with a curing agent (CR-001: trade name, manufactured by Toyo Ink Co., Ltd.).

The thickness of the pressure sensitive adhesive layer in the blue light cut laminate of the embodiment is preferably in a range of 5 µm to 100 µm from the viewpoint of both pressure sensitive adhesive force and handling.

In the blue light cut laminate according to the embodiment of the present disclosure, in addition to the transparent base material, the pressure sensitive adhesive layer, and the resin molded body including the resin layer and the protective layer, other layers may be provided if as required.

For example, the blue light cut laminate may further have a hard coat layer on the surface on the protective layer side of the resin molded body from the viewpoint of improving scratch resistance.

### Examples

The resin molded body and the blue light cut laminate of the present disclosure will be described in detail below with reference to Examples and Comparative Examples. The materials, the used amount, the ratio, the contents of a treatment, and the procedures of a treatment described in examples below can be appropriately changed within the range not departing the scope of the present invention. Therefore, the present disclosure is not limitedly interpreted by the specific examples shown below.

### [Example 1]

### (Formation of Resin Layer)

Pellets of polyethylene terephthalate (PET) dried at 160°C for 8 hours and the compound (A) having the following structure, which is the compound represented by Formula (1), were mixed and put into an extruder. The mixture was melt-kneaded at a melt temperature of 280°C to prepare a masterbatch which is a compound (A) containing pellet. Thereafter, the PET pellet dried at 160°C for 8 hours and the masterbatch which is the compound (A) containing pellet obtained above were mixed in such an amount that the content of the compound (A) in the resin layer was 0.7% by mass, melt-kneading was performed at 280°C, and thus a resin layer having a thickness of 100 µm was formed by a melt extrusion method.

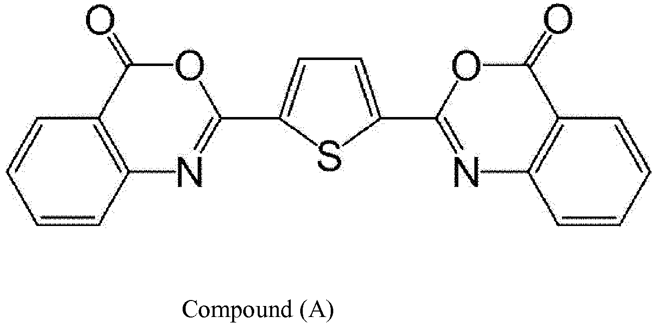

### (Formation of Protective Layer)

A composition for forming a protective layer 1 containing a urethane resin prepared by mixing according to the formulation described in Table 1 below was applied to one surface of the obtained resin layer, and dried at 160°C for 2 minutes, and thus a urethane resin containing protective layer 1 having a thickness of 4.8 µm was formed.

**[Table 1]**

| (Parts by mass) | | | |
|---|---|---|---|
| | Material | Composition for forming urethane resin containing protective layer 1 | Composition for forming urethane resin containing protective layer 2 |
| Polyurethane latex | TAKELAC (registered trademark) WS-4000 (manufactured by Mitsui Chemicals, Inc., solid content: 30% by mass) | 46.1 | 0.0 |
| Polyurethane latex | TAKELAC (registered trademark) WS-5100 (manufactured by Mitsui Chemicals, Inc., solid content: 30% by mass) | 0.0 | 46.1 |
| Film formation aid | 2-butoxyethanol (manufactured by Wako Pure Chemical Industries, Ltd.) | 10.0 | 10.0 |
| Surfactant | Sodium = bis(3,3,4,4,5,5,6,6-nonafluoro)= 2-sulfonate oxy succinate, manufactured by FUJIFILM Fine Chemical Co., Ltd., solid content: 2% by mass, methanol solvent) | 1.3 | 1.3 |
| Solvent | Water | 42.6 | 42.6 |
| | Total | 100.0 | 100.0 |

### (Formation of Resin Molded Body)

An A-1 solution prepared according to the formulation described in Table 2 below was applied to the surface of the protective layer formed on the surface of the resin layer as described above using a wire bar, in such an amount that the average thickness after drying was 30 nm, heated at 150°C for 1 minute, dried and cured to form a layer of high refractive index.

**[Table 2]**

| Coating solution for forming layer of high refractive index (A-1 solution) | | |
|---|---|---|
| Component | Trade name | Content (parts by mass) |
| Polyurethane latex | TAKELAC (registered trademark) WS-4000 (manufactured by Mitsui Chemicals, Inc., solid content: 30% by mass) | 1.0 |
| Zirconium oxide | SZR-CW (manufactured by SAKAI CHEMICAL INDUSTRY CO., LTD. solid content: 30% by mass, average particle diameter: 8 nm) | 3.1 |
| Film formation aid | 2-butoxyethanol (manufactured by Wako Pure Chemical Industries, Ltd.) | 5.0 |
| Surfactant | Sodium = bis(3,3,4,4,5,5,6,6-nonafluoro) = 2-sulfonate oxy succinate, manufactured by FUJIFILM Fine Chemical Co., Ltd., solid content: 2% by mass, methanol solvent) | 0.5 |
| Solvent | Water | 90.4 |
| | Total | 100.0 |

A B-1 solution prepared according to the formulation was applied to the surface of the obtained layer of high refractive index using a wire bar in such an amount that the average thickness after drying was 30 nm. Then, the solution was heated at 130°C for 1 minute, dried and solidified to form a layer of low refractive index 1.

### -Preparation of Silver Nanodisk Dispersion b2-

### 1. Preparation of Silver Nanodisk Dispersion b1

First, a silver nanodisk dispersion b1 was prepared.

In a reaction vessel made of NTKR-4 (stainless steel, manufactured by Nippon Steel Nisshin Co., Ltd.), 13 liters (L) of ion exchange water was weighed, 1.0 L of a 10 g/L citric acid trisodium (anhydride) aqueous solution was added under stirring at a stirring rate of 400 rotations per minute (rpm: rotation/minute) using a chamber with an agitator with 4 propellers made of NTKR-4 and 4 paddles made of NTKR-4 provided to a shaft made of stainless steel (SUS316L), and the mixed solution was kept at 35°C. 0.68 L of a polystyrene sulfonic acid aqueous solution with a concentration of 8.0 g/L was added to the obtained mixed solution, and further 0.041 L of a sodium borohydride aqueous solution prepared to have a concentration of 23 g/L using a 0.04 N (mol/L) sodium hydroxide aqueous solution was added. Furthermore, 13 L of a 0.10 g/L silver nitrate aqueous solution was added at 5.0 L/min.

Next, 1.0 L of a 10 g/L trisodium citrate (anhydride) aqueous solution and 11 L of ion exchange water were added, and 0.68 L of an 80 g/L potassium hydroquinone sulfonate aqueous solution was further added. The stirring rate was increased to 800 rpm, and 8.1 L of a 0.10 g/L silver nitrate aqueous solution was added at 0.95 L/min, and then the temperature was lowered to 30°C.

Thereafter, 8.0 L of a 44 g/L methylhydroquinone aqueous solution was added, and then the total amount of a gelatin aqueous solution at 40°C described later was added. The stirring rate was increased to 1200 rpm, and, the total amount of a silver sulfite white precipitate mixed solution described later was added to prepare a preparation solution.

The pH of the prepared solution was measured, and in the stage where the pH change was stopped, 5.0 L of a IN NaOH aqueous solution was added at 0.33 L/min. Then, 0.18 L of a 2.0 g/L 1-(m-sulfophenyl)-5-mercaptotetrazole sodium aqueous solution (aqueous solution whose pH was adjusted to 7.0 ± 1.0 using NaOH and citric acid (anhydride)) was added, and 0.078 L of a 70 g/L 1,2-benzisothiazolin-3-one aqueous solution (an aqueous solution adjusted to be alkaline using a NaOH aqueous solution) was further added. Thus, a silver nanodisk dispersion b1 was prepared.

### 2. Preparation of Gelatin Aqueous Solution

16.7 L of ion exchange water was weighed in a dissolution tank made of stainless steel (SUS316L). While performing stirring at a low rate with an agitator made of SUS316L, 1.4 kg of an alkali-treated bovine bone gelatin (GPC weight average molecular weight: 200,000) was added. Further, 0.91 kg of an alkali-treated bovine bone gelatin (GPC weight average molecular weight: 210,000) subjected to a deionization treatment, a proteolytic enzyme treatment, and an oxidation treatment with hydrogen peroxide was added. Then, the temperature was increased to 40°C and swelling and dissolution of the gelatin was performed at the same time to completely dissolve the gelatin. Thus, a gelatin aqueous solution used for the preparation of the silver nanodisk dispersion liquid b1 described above was obtained.

### 3. Preparation of Silver Sulfite White Precipitate Mixture

8.2 L of ion exchange water was weighed in a dissolution tank made of SUS316L, and 8.2 L of a 100 g/L silver nitrate aqueous solution was added. While performing stirring at a high rate with an agitator made of SUS316L, 2.7 L of a 140 g/L sodium sulfite aqueous solution was added in a short period of time, and a mixed solution containing a white precipitate of silver sulfite, that is, a silver sulfite white precipitate mixed solution used for preparing the above-described silver nanodisk dispersion b1 was prepared. The silver sulfite white precipitate mixture was prepared immediately before use.

### 4. Preparation of Silver Nanodisk Dispersion b2

800 g of the silver nanodisk dispersion b1 obtained above was collected in a centrifuge tube, and the pH of the solution at 25 °C was adjusted in a range of 9.2 ± 0.2 using at least one of IN NaOH and IN sulfuric acid.

A centrifugation operation was performed at 9000 rpm for 60 minutes by setting the temperature at 35°C using a centrifuge (himacCR22GIII, manufactured by Hitachi Koki Co., Ltd., angle rotor R9A), and then 784 g of a supernatant was disposed. A 0.2 mM NaOH aqueous solution was added to the precipitated silver nanodisk such that the total amount was set to 400 g and the solution was stirred by hand using a stirring bar to obtain a coarse dispersion liquid.

By performing the same operation as described above, 24 coarse dispersion liquids were prepared such that the total amount was set to 9600 g, added to a tank made of SUS316L, and then mixed with each other.

Further, 10 milliliters (ml) of a 10 g/L solution (diluted with a mixed solution containing methanol and ion exchange water at a volume ratio of 1:1 (volume ratio)) of Pluronic 31R1 (manufactured by BASF SE) was added thereto.

The mixture of the coarse dispersion liquid and the solution of Pluronic 31R1 described above in the tank was subjected to a batch type dispersion treatment at 9000 rpm for 120 minutes using an Auto Mixer 20 type (stirring unit was a homomixer MARKII) (manufactured by PREMIX Corporation). The liquid temperature during dispersion was maintained to 50°C. After the dispersion, the temperature was decreased to 25 °C and single-pass filtration was performed using a Profile II Filter (product type: MCY1001Y030H13, manufactured by PALL Corporation) to obtain a silver nanodisk dispersion b2.

That is, a silver nanodisk dispersion b2 (dispersion b2 shown in Table 3) was prepared by performing a desalting treatment and a redispersing treatment on the prepared silver nanodisk dispersion b1 in this manner.

**[Table 3]**

| Coating solution for forming layer of low refractive index 1 (B-1 solution) | | |
|---|---|---|
| Component | Trade name | Content (parts by mass) |
| Binder | HYDRAN (registered trademark) HW 350 (manufactured by DIC Corporation, solid content: 30% by mass) | 0.8 |
| Surfactant | RAPIZOLE (registered trademark) A-90 (manufactured by NOF CORPORATION, solid content: 1% by mass) | 1.2 |
| Surfactant | NAROACTY (registered trademark) CL-95 (manufactured by Sanyo Chemical Industries, Ltd., solid content: 1% by mass) | 1.5 |
| Antioxidant | 1-(5-methylureidephenyl)-5-mercaptotetrazole (manufactured by Wako Pure Chemical Industries, Ltd., solid content: 2% by mass) | 2.3 |
| Solvent | Water | 352 |
| Solvent | Ethanol (manufactured by Wako Pure Chemical Industries, Ltd.) | 20.4 |
| Silver nanodisk dispersion | Dispersion b2 | 38.5 |
| | Total | 100.0 |

Next, a C-1 solution prepared according to the formulation described in Table 4 below was applied to the surface of the layer of low refractive index 1 using a wire bar in such an amount that the average thickness after drying was 65 nm, and heated at 60°C for 1 minute. Then, the solution was irradiated with ultraviolet rays at an exposure dose of 200 mJ/cm² and cured to form a layer of low refractive index 2. The following compound M-11 was prepared by the method described in paragraphs [0017] to [0025] of JP2006-028280A.

**[Table 4]**

| Coating solution for forming layer of low refractive index 2 (C-1 solution) | | |
|---|---|---|
| Component | Trade name | Content (parts by mass) |
| Hollow silica | OPSTER (registered trademark) TU 2361 (manufactured by JSR Corporation, solid content: 10% by mass) | 14.1 |
| Fluorine-containing polyfunctional monomer | Compound M-11 (following structure) (solid content: 40% by mass) | 1.8 |
| Fluorine-free multifunctional monomer | KAYARD(registered trademark) PET-30 (manufactured by Nippon Kayaku, Ltd., solid content: 100% by mass) | 0.2 |
| dispersed silica sol | MEK-ST-L (manufactured by Nippon Chemical Industries, Ltd., solid content: 30% by mass) | 0.5 |
| Polymerization initiator | IRGACURE (registered trademark) 127(manufactured by BASF Corporation, solid content: 100% by mass) | 0,02 |
| Reactive silicon compound | SILAPLAIN (registered trademark) FM-0725 (manufactured by JNC Corporation, solid content: 100% by mass) | 0.08 |
| Solvent | Methylethlyketone (manufactured by Wako Pure Chemical Industries, Ltd.) | 83.3 |
| | Total | 100.0 |

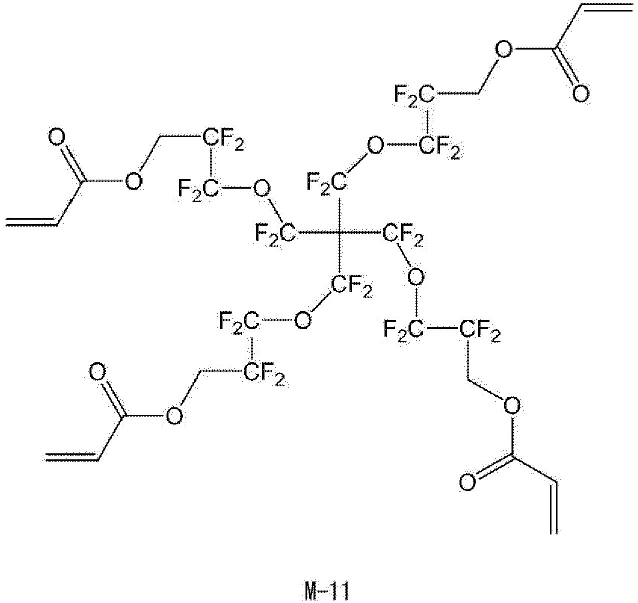

The resin molded body of Example 1 having a protective layer, a layer of high refractive index, a layer of low refractive index 1 and a layer of low refractive index 2 in this order on the surface of the resin layer was obtained by the method described above.

The layer of high refractive index, the layer of low refractive index 1 and the layer of low refractive index 2 in the resin laminate of Example 1 function as an antireflection layer.

### [Examples 2 to 10]

### (Formation of Resin Layer)

Pellets of polyethylene terephthalate (PET) dried at 160°C for 8 hours and the compound (A) having the above structure were mixed and put into an extruder. The mixture was melt-kneaded at a melt temperature of 280°C to prepare a masterbatch which is a compound (A) containing pellet (compound (A) containing pellet).

Thereafter, the PET pellet dried at 160°C for 8 hours and the masterbatch which is the compound (A) containing pellet obtained above were mixed in such an amount that the content of the compound (A) in the resin layer was the amount shown in Table 5 below, melt-kneading was performed at 280°C, and thus a resin layer having a thickness of 100 µm was formed by a melt extrusion method.

### (Formation of Protective Layer)

An acrylic resin containing protective layer 1 was formed on the surface of the resin layer obtained above by the following method.

The materials shown in Table 5 below were mixed in the amounts described in the column of "Composition for forming acrylic resin containing protective layer 1" to prepare a composition for forming an acrylic resin containing protective layer 1. The composition for forming an acrylic resin containing protective layer 1 obtained was applied to the surface of the resin layer in such an amount that the film thicknesses shown in Tables 9 to 11 below were obtained, and dried at 60°C for 2 minutes to form a layer of composition for forming an acrylic resin containing protective layer 1. Thereafter, the composition was irradiated with ultraviolet rays at an exposure dose of 320 mJ/cm² to cure the composition layer for forming an acrylic resin containing protective layer 1 and cured. Thus, a resin molded body of each of Examples 2 to 10 having an acrylic resin containing protective layer 1 having the thickness shown in Tables 9 to 11 on the surface of the resin layer was obtained.

**[Table 5]**

| (Parts by mass) | | | |
|---|---|---|---|
| | Material | Composition for forming acrylic resin containing protective layer 1 | Composition for forming acrylic resin containing protective layer 2 |
| Solvent | TOKUSO-IPA (isopropyl alcohol, manufactured by Tokuyama Corporation) | 41.55 | 41.55 |
| Solvent | MFG (manufactured by Nippon Nyukazai Co., Ltd., methyl propylene glycol; glycol ether) | 13.6 | 13.6 |
| Trifunctional monomer | NK ESTER A-GLY-9E (manufactured by Shin-Nakamura Chemical Co., Ltd., ethoxylated glycerin triacrylate) | 2 | 0 |
| Hexafunctional monomer | KAYARAD (registered trademark) DPHA (manufactured by Nippon Kayaku Co., Ltd., solution diluted to 76% with PGMEA) | 41.85 | 43.85 |
| Photopolymerizati on initiator | Irgacure (registered trademark) 184 (manufactured by BASF SE, 1-hydroxycyclohexyl phenyl ketone) | 1 | 1 |
| | Total | 100 | 100 |

### [Example 11]

A resin layer having a thickness of 100 µm was formed in the same manner as in Example 1.

A polysiloxane containing protective layer was formed on the surface of the obtained resin layer by a sol-gel method.

That is, first, the components shown in Table 6 below were mixed to prepare a composition for forming a polysiloxane containing protective layer.

Specifically, 3-glycidoxypropyltrimethoxysilane was added dropwise into an acetic acid aqueous solution for 3 minutes while stirring the acetic acid aqueous solution. Next, tetraethoxysilane was added to the acetic acid aqueous solution with stirring for 3 minutes. Subsequently, stirring was continued for 2 hours. Next, colloidal silica, a chelating agent and a surfactant were sequentially added to prepare a composition for forming a polysiloxane containing protective layer.

**[Table 6]**

| (Parts by mass) | | |
|---|---|---|
| | Material | Composition for forming polysiloxane containing protective layer |
| Water | Water | 67.7 |
| Binder | KBE-04 (manufactured by Shin-Etsu Chemical Co., Ltd., tetraethoxysilane) | 4.6 |
| Binder | KBE-403 (manufactured by Shin-Etsu Chemical Co., Ltd., 3-glycidoxypropyl triethoxysilane) | 15.2 |
| Catalyst | Acetic acid solution (manufactured by Daicel Chemical Industries, Ltd.) | 0.3 |
| Catalyst | ALUMINUM CHELATE D (manufactured by Kawaken Fine Chemicals Co., Ltd.) | 3.8 |
| Colloidal silica | SNOWTEX OZL 35 (manufactured by Nissan Chemical Industries, Ltd.) | 3.7 |
| Surfactant | RAPIZOLE A-90 (manufactured by NOF CORPORATION) | 2.8 |
| Surfactant | NAROACTY CL-95 (manufactured by Sanyo Chemical Industries, Ltd.) | 1.9 |
| | Total | 100.0 |

The surface of the resin layer was subjected to a corona discharge treatment. The above-described composition for forming a polysiloxane containing protective layer was applied to the surface of the resin layer subjected to a corona discharge treatment by a bar coating method, heated, and dried at 170°C for 1 minute to form a protective layer having a thickness of 5 µm. By applying the composition for forming a polysiloxane containing protective layer and then heating the composition, a condensation reaction of the siloxane compound proceeded to cure the composition.

In this manner, a resin molded body of Example 11 having a polysiloxane containing protective layer on the surface of the resin layer was obtained.

### [Example 12]

A resin layer having a thickness of 100 µm was formed in the same manner as in Example 1.

An acrylic resin containing protective layer 2 was formed to obtain a resin molded body of Example 12 in the same manner as in Example 2 except that instead of the above composition for forming an acrylic resin containing protective layer 1 shown in Table 5, a composition for forming an acrylic resin containing protective layer 2 was applied to the surface of the obtained resin layer.

### [Examples 13 and 14]

A resin layer having a thickness of 100 µm was formed in the same manner as in Example 1.

A urethane resin containing protective layer 1 coating solution composition or a urethane resin containing protective layer 2 coating solution composition prepared according to the formulation shown in Table 1 was applied to one surface of the obtained resin layer in such an amount that each film thickness after drying was 5 µm by bar coating and dried at 160°C for 2 minutes, and a urethane resin containing protective layer 1 (Example 13) or a urethane resin containing protective layer 2 (Example 14) was formed on one surface of the resin layer. Thus, a resin molded body of each of Examples 13 and 14 was obtained.

### [Example 15]

A resin molded body of Example 15 was obtained in the same manner as in Example 2 except that instead of the compound (A) which is the compound represented by Formula (1) used in Example 2, a compound (B) having the following structure was used.

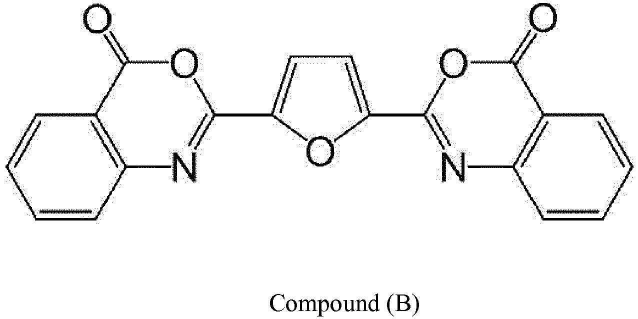

### [Example 16]

A resin molded body of Example 16 was obtained in the same manner as in Example 2 except that instead of the compound (A) which is the compound represented by Formula (1) used in Example 2, a compound (C) having the following structure was used.

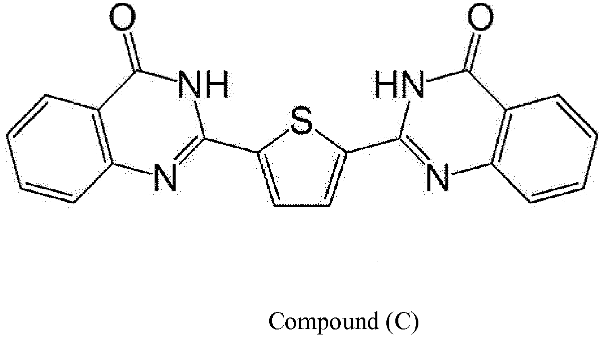

### [Examples 17 to 20]

### (Formation of Resin Layer: Spectacle Lens)

100 parts by mass of MR-8 (registered trademark) (trade name, refractive index: 1.60, manufactured by Mitsui Chemical Co., Ltd.), which is a precursor monomer of a thiourethane resin, each amount of the compound (A) described above shown in Tables 9 to 11, and 0.01 parts by mass of dibutyltin dichloride as a polymerization catalyst were mixed at this content ratio to obtain a composition for forming a resin layer. After a mold was filled with the obtained composition for forming a resin layer, heating was performed at 130°C for 2 hours to curing the composition. Thus, a resin layer for a spectacle lens having a thickness of 2 mm was prepared. The prepared resin layer for a spectacle lens was visually confirmed and as a result, it was confirmed the resin layer was transparent.

### (Formation of Protective Layer)

The obtained resin layer for a spectacle lens was immersed in the composition for forming an acrylic resin containing protective layer 1 shown in Table 5, and then taken out, and a layer of the acrylic resin containing protective layer 1 was formed on both surfaces of the resin layer for a spectacle lens and temporarily dried at 60°C for 2 minutes. Then, the layer of the composition for forming an acrylic resin containing protective layer 1 was irradiated with ultraviolet rays and cured. Thus, a resin molded body of each of Examples 17 to 20, which is a spectacle lens, having the acrylic resin containing protective layer 1 having a thickness of 5 µm on both surfaces of the resin layer for spectacle lens was obtained.

### [Comparative Example 1]

A resin layer having a thickness of 100 µm was formed in the same manner as in Example 1.

In Comparative Example 1, a molded body in which a protective layer was not formed and only the resin layer was provided was formed.

### [Comparative Example 2]

A resin molded body of Comparative Example 2 was obtained in the same manner as in Example 2 except that instead of the compound (A), which is the compound represented by Formula (1) used in Example 2, a comparative compound (D) having the following structure, which is a comparative compound (comparative ultraviolet absorber), was used.

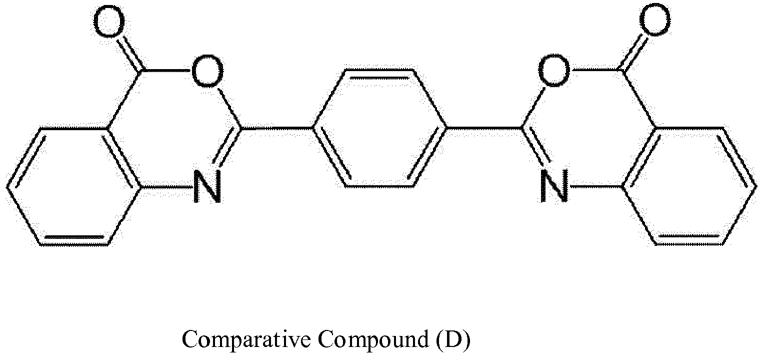

### [Comparative Example 3]

A resin layer having a thickness of 100 µm was formed in the same manner as in Example 1.

A resin molded body of Comparative Example 3 was obtained by a composition for forming a polyvinyl alcohol (PVA) containing protective layer according to the formulation described in Table 7 below, applying the obtained composition for forming a PVA containing protective layer to the obtained resin layer by bar coating, and drying the composition at 130°C for 2 minutes to form a PVA containing protective layer.

**[Table 7]**

| (Parts by mass) | | |
|---|---|---|
| | Material | Composition for forming PVA containing protective layer |
| Water | Water | 90.3 |
| Binder | PVA 235 (manufactured by Kuraray Co., Ltd.) | 7.1 |
| Film formation aid | BUTYCENOL 20P (manufactured by Kyowa Hakko Chemical Co., Ltd.) | 2.3 |
| Surfactant | EMULGEN 109P (manufactured by Kao Corporation) | 0.3 |
| | Total | 100.0 |

### [Comparative Example 4]

A resin layer having a thickness of 100 µm was formed in the same manner as in Example 1.

A resin molded body of Comparative Example 4 was obtained by preparing a composition for forming a polyethylene (PE) containing protective layer containing a modified polyethylene resin aqueous dispersion according to the formulation described in Table 8 below, applying the obtained composition for forming a PE containing protective layer to the obtained resin layer by bar coating, and drying the composition at 130°C for 2 minutes to form a PE containing protective layer.

**[Table 8]**

| (Parts by mass) | | |
|---|---|---|
| | Material | Composition for forming PE containing protective layer |
| Water | Water | 79.9 |
| Binder | AROBASE (registered trademark) SE-1013N (manufactured by Unitika Ltd.) | 4.6 |
| Crosslinking agent | EPOCROS (registered trademark) WS-700 (manufactured by Nippon Shokubai Co., Ltd.) | 15.2 |
| Surfactant | EMALEX (registered trademark) 110 (manufactured by Nippon Emulsion Co., Ltd.) | 0.3 |
| | Total | 100.0 |

### [Evaluation of Resin Molded Body]

The resin molded body obtained in each of Examples and Comparative Examples was evaluated by the following method.

### (1. SP Value)

The SP value (solubility parameter) of the resin contained in the protective layer is calculated by the Fedors method, and the value is shown in Table 6.

The Fedors method is described in Table 7.4 in Properties of Polymer which is the above-described document and the calculation method is performed according to the description of the document.

### (2. Ultraviolet Blocking Rate at 400 nm to 420 nm)

With respect to the resin molded body of each of Examples and Comparative Examples, the transmittance at a wavelength of 300 nm to 800 nm in a case where light was incident from a surface having a protective layer was measured using an ultraviolet visible near infrared spectrometer (UV3100, manufactured by Shimadzu Corporation), and the average value of the transmittance in a wavelength range of 400 nm to 420 nm was calculated. The value obtained by subtracting the average value from 100% was taken as a blocking rate for light having a wavelength of 400 nm to 420 nm. Tables 9 to 11 show the results of evaluation according to the following evaluation standards.

### [Evaluation Standards]

A: The blocking rate for light having a wavelength of 400 nm to 420 nm is 60% or more.
B: The blocking rate for light having a wavelength of 400 nm to 420 nm is 30% or more and less than 60%.
C: The blocking rate for light having a wavelength of 400 nm to 420 nm is less than 30%.

### (3. Leaching Evaluation of Specific Ultraviolet Absorber from Resin Molded Body)

The haze was used to evaluate the situation of the leaching of the compound represented by Formula (1) from the resin molded body. That is, in a case where the compound represented by Formula (1) is leached from the resin molded body, the resin is whitened due to the leached compound and thus the haze of the resin is increased. Based on the degree of increase of the haze of the resin, the effect of suppressing the leaching of the compound represented by Formula (1) was evaluated.

The haze was measured using a haze meter (NDH 5000, manufactured by Nippon Denshoku Industries Co., Ltd.), and was evaluated according to the following evaluation standards. The results are shown in Tables 9 to 11.

### [Evaluation Standards]

A: The haze value is 2.0% or less.
B: The haze value is more than 2.0% and 3.0% or less.
C: The haze value is more than 3.0%.

### (4. Evaluation of Increase in Leaching of Specific Ultraviolet Absorber from Resin Molded Body After Aging at High Temperature)

The resin molded body of each of Examples and Comparative Examples was aged for 250 hours in an atmosphere of 90°C and humidity 3%RH, the haze value before and after the aging test was measured using a haze meter (NDH 5000, manufactured by Nippon Denshoku Industries Co., Ltd.), and an increase in haze after aging was calculated and evaluated according to the following evaluation standards. The results are shown in Tables 9 to 11 below.

### [Evaluation Standards]

A: An increase in the haze value is 1.0% or less.
B: An increase in the haze value is more than 1.0% and 2.0% or less.
C: An increase in the haze value is more than 3.0%.

### (5. Curling Property Evaluation of Resin Molded Body)

The sheet-like resin molded body in each of Examples and Comparative Examples was cut into a size of 10 cm × 10 cm and was used as an evaluation sample. After placing the obtained evaluation sample in an environment at a temperature of 25 °C and a relative humidity of 60% for 48 hours or longer, the distance from the surface to the place farthest from the surface when the sample was placed on the same plane was taken as the amount of curl, and evaluated according to the following standards. The results are shown in Tables 9 to 11 below.

### [Evaluation Standards]

A: The amount of curl is less than ± 5 mm.
B: The amount of curl is ± 5 mm or more and less than ± 10 mm.
C: The amount of curl is ± 10 mm or more.

**[Table 9]**

| | Resin molded body | | | | | | | Performance evaluation | | | | |
|---|---|---|---|---|---|---|---|---|---|---|---|---|
| | Resin layer | | | | Protective layer | | | Ultraviolet blocking rate at wavelength of 400 nm to 420 nm | | Leaching of ultraviolet absorber | Leaching of ultraviolet absorber after aging at high temperature | Curling properties |
| | Thickness [µm] | Resin | Ultraviolet absorber | Amount added [% by mass] | Composition for forming protective layer | Thickness [µm] | SP value of protective layer [(J/cm³) ^{1/2}] | | | | | |
| Example 1 | 100 | PET | Compound (A) | 0.7 | Composition for forming urethane containing protective layer 1/ Composition for forming antireflection layer | 5 | 24.7 (urethane containing protective layer 1) | 90% | A | A | A | A |
| Example 2 | 100 | PET | Compound (A) | 0.7 | Composition for forming acrylic resin containing protective layer 1 | 5 | 22.6 | 93% | A | A | A | A |
| Example 3 | 100 | PET | Compound (A) | 0.1 | Composition for forming acrylic resin containing protective layer 1 | 5 | 22.6 | 60% | A | A | A | A |
| Example 4 | 100 | PET | Compound (A) | 0.5 | Composition for forming acrylic resin containing protective layer 1 | 5 | 22.6 | 85% | A | A | A | A |
| Example 5 | 100 | PET | Compound (A) | 3.3 | Composition for forming acrylic resin containing protective layer 1 | 5 | 22.6 | 99% | A | A | A | A |
| Example 6 | 100 | PET | Compound (A) | 5.0 | Composition for forming acrylic resin containing protective layer 1 | 5 | 22.6 | 100% | A | A | A | A |
| Example 7 | 100 | PET | Compound (A) | 5.2 | Composition for forming acrylic resin containing protective layer 1 | 5 | 22.6 | 100% | A | B | A | A |
| Example 8 | 100 | PET | Compound (A) | 0.7 | Composition for forming acrylic resin containing protective layer 1 | 0.4 | 22.6 | 93% | A | A | B | A |

**[Table 10]**

| | Resin molded body | | | | | | | Performance evaluation | | | | |
|---|---|---|---|---|---|---|---|---|---|---|---|---|
| | Resin layer | | | | Protective layer | | | Ultraviolet blocking rate at wavelength of 400 nm to 420 nm | | Leaching of ultraviolet absorber | Leaching of ultraviolet absorber after aging at high temperature | Curling properties |
| | Thickness [µm] | Resin | Ultraviolet absorber | Amount added [% by mass] | Composition for forming protective layer | Thickness [µm] | SP value of protective layer [(J/cm³) ^{1/2}] | | | | | |
| Example 9 | 100 | PET | Compound (A) | 0.7 | Composition for forming acrylic resin containing protective layer 1 | 10 | 22.6 | 93% | A | A | A | A |
| Example 10 | 100 | PET | Compound (A) | 0.7 | Composition for forming acrylic resin containing protective layer 1 | 11 | 22.6 | 93% | A | A | A | B |
| Example 11 | 100 | PET | Compound (A) | 0.7 | Composition for forming polysiloxane containing protective layer | 5 | - | 93% | A | A | B | A |
| Example 12 | 100 | PET | Compound (A) | 0.7 | Composition for forming acrylic resin containing protective layer 2 | 5 | 22,7 | 93% | A | A | A | A |
| Example 13 | 100 | PET | Compound (A) | 0.7 | Composition for forming urethane containing protective layer 1 | 5 | 24.7 | 93% | A | A | A | A |
| Example 14 | 100 | PET | Compound (A) | 0,7 | Composition for forming urethane containing protective layer 2 | 5 | 24,2 | 93% | A | A | A | A |
| Example 15 | 100 | PET | Compound (B) | 0.7 | Composition for forming acrylic resin containing protective layer 1 | 5 | 22.6 | 90% | A | A | A | A |
| Example 16 | 100 | PET | Compound (C) | 0.7 | Composition for forming acrylic resin containing protective layer 1 | 5 | 22.6 | 88% | A | A | A | A |

**[Table11]**

| | Resin molded body | | | | | | | Performance evaluation | | | | |
|---|---|---|---|---|---|---|---|---|---|---|---|---|
| | Resin layer | | | | Protective layer | | | Ultraviolet blocking rate at wavelength of 400 nm to 420 nm | | Leaching of ultraviolet absorber | Leaching of ultraviolet absorber after aging at high temperature | Curling properties |
| | Thickness [µm] | Resin | Ultraviolet absorber | Amount added [% by mass] | Composition for forming protective layer | Thickness [µm] | SP value of protective layer [(J/cm³)^{1/2}] | | | | | |
| Example 17 | 2000 | Urethane | Compound (A) | 0.7 | Composition for forming acrylic resin containing protective layer 1 | 5 | 22.6 | 88% | A | A | A | A |
| Example 18 | 2000 | Urethane | Compound (A) | 1.6 | Composition for forming acrylic resin containing protective layer 1 | 5 | 22.6 | 93% | A | A | A | A |
| Example 19 | 2000 | Urethane | Compound (A) | 5.0 | Composition for forming acrylic resin containing protective layer 1 | 5 | 22.6 | 100% | A | A | A | A |
| Example 20 | 2000 | Urethane | Compound (A) | 5.2 | Composition for forming acrylic resin containing protective layer 1 | 5 | 22.6 | 100% | A | B | A | A |
| Comparative Example 1 | 100 | PET | Compound (A) | 0.7 | | | | 93% | A | A | C | A |
| Comparative Example 2 | 100 | PET | Comparative compound (D) | 0.7 | Composition for forming acrylic resin containing protective layer 1 | 5 | 22.6 | 12% | C | A | A | A |
| Comparative Example 3 | 100 | PET | Compound (A) | 0.7 | Composition for forming PVA containing protective layer | 5 | 29.1 | 93% | A | A | C | A |
| Comparative Example 4 | 100 | PET | Compound (A) | 0.7 | Composition for forming PE containing protective layer | 5 | 17.1 | 93% | A | A | C | A |

From the evaluation results of Tables 9 to 11, all the resin molded bodies of Examples have good barrier properties of long wavelength ultraviolet rays and blue light, and from the measurement results of the haze, as a result of suppressing the leaching of the specific ultraviolet absorber, and suppressing the leaching of the specific ultraviolet absorber from the resin molded body not only immediately after the production but also after aging at a high temperature, it is found that an increase in haze in the resin molded body is suppressed without causing whitening due to the leaching.

From the comparison of Example 1 and Example 2, no reduction in performance was observed even in a case where the antireflection layer was formed on the resin molded body.

Further, from the results of Example 17 to Example 20, it is found that even in a case where the resin molded body of the present disclosure is applied to a spectacle lens, the long wavelength ultraviolet ray and blue light blocking properties are good, and the leaching of the ultraviolet absorber is suppressed for a long period of time. Accordingly, in the spectacle lenses of Example 17 to Example 20, an increase in haze is suppressed and in a case of using spectacles provided with each spectacle lens, it can be expected to reduce eye fatigue due to ultraviolet rays and blue light in a case of viewing a displayed image on a display or the like.

On the other hand, in the resin molded body of Comparative Example 1 having no protective layer, and the resin molded bodies of Comparative Examples 3 and 4 having a protective layer containing a resin outside the range of the present invention, it can be found that the haze is increased after aging at a high temperature, the whitening progresses by the leaching of the specific ultraviolet absorber to increase the haze. In addition, it is found that the resin molded body of Comparative Example 2 containing the comparative ultraviolet absorber (compound (D)) instead of the specific ultraviolet absorber in the resin layer has extremely low ultraviolet blocking properties and the like. From this, it is found that while the ultraviolet absorbing ability is maintained even in a case where the specific ultraviolet absorber in the present disclosure is contained in the resin and heat-molded, even in a case where the comparative ultraviolet absorber is contained in the resin and heat-molded in the same manner, the ultraviolet absorber is damaged by heat and the ultraviolet absorbing ability is significantly decreased.

Each resin molded body of Examples 1 and 2 was aged in an environment at 90°C and a humidity of 3%RH for 250 hours, the ultraviolet blocking rate of each resin molded body after aging at a high temperature was measured by the same method as in "2. Ultraviolet Blocking Rate at 400 nm to 420 nm", and the variation rate of the ultraviolet blocking rate before and after aging at a high temperature was calculated.

As a result, the variation rate of the ultraviolet blocking rate by aging at a high temperature was 3% or less in each of Example 1 and Example 2. From this, it is found that the resin molded bodies of Example 1 and Example 2 maintain the ultraviolet blocking properties even after aging at a high temperature.

### [Example 21]

In the resin molded body prepared in Example 2, a peelable separator (silicone coat PET) of PANACLEAN PD-S1 (pressure sensitive adhesive layer having a thickness of 25 µm) manufactured by PANAC Corporation was peeled off, the pressure sensitive adhesive layer was bonded to the surface opposite to the surface having a protective layer, and a pressure sensitive adhesive layer was formed on the surface of the resin layer side of the resin molded body. Next, the resin molded body was laminated on a glass plate having a thickness of 3 mm, which is a transparent base material with the pressure sensitive adhesive layer interposed therebetween, and thus a blue light cut laminate provided with the pressure sensitive adhesive layer and the resin molded body on the transparent base material was obtained.

The blue light cut laminate in Example 21 is a transparent laminate in a case where the laminate is visually observed, and as a result of performing "4. Evaluation of Increase in Leaching of Specific Ultraviolet Absorber from Resin Molded Body After Aging at High Temperature", it is found that the increase rate of the haze value is 1.0% or less, an increase in haze due to the leaching of the specific ultraviolet absorber by aging at a high temperature is suppressed.

In addition, the ultraviolet blocking rate at 400 nm to 420 nm measured by the same method as in "2. Ultraviolet Blocking Rate at 400 nm to 420 nm" is the same as the ultraviolet blocking rate of the resin laminate of Example 2 and was evaluated as evaluation A rank.

The disclosure of Japanese Patent Application No. 2017-071851 filed on March 31, 2017 is incorporated in the present specification by reference.

All documents, patent applications and technical standards mentioned herein are incorporated herein by reference to the same extent as a case where each individual document, patent application or technical standard was specifically and individually indicated to be incorporated by reference.

## Claims

1. A resin molded body comprising:
a resin layer containing a resin and a compound represented by Formula (1); and
on at least one surface of the resin layer, a protective layer that contains at least one substance selected from the group consisting of urethane resin, acrylic resin, and polysiloxane, 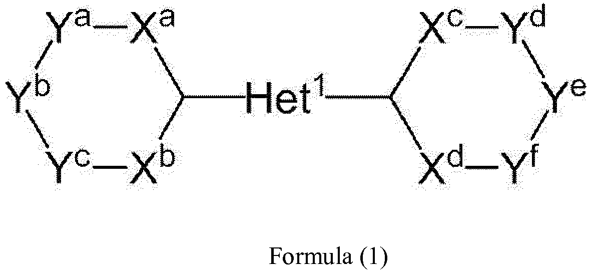
in Formula (1), Het¹ represents a divalent 5-membered or 6-membered aromatic heterocyclic residue,
X^{a}, X^{b}, X^{c}, and X^{d} each independently represent a hetero atom,
Y^{a}, Y^{b}, Y^{c}, Y^{d}, Y^{e}, and Y^{f} each independently represent a hetero atom or a group containing a carbon atom, and
a ring bonded to Het¹ may have a double bond at any position.

2. The resin molded body according to claim 1,
wherein a content of the compound represented by Formula (1) with respect to a total amount of the resin layer is more than 0% by mass and 5.0% by mass or less.

3. The resin molded body according to claim 1 or 2,
wherein a thickness of the protective layer is 0.5 µm to 10 µm.

4. The resin molded body according to any one of claims 1 to 3,
wherein the protective layer contains a urethane resin or an acrylic resin, and a solubility parameter of the protective layer calculated by a Fedors method is in a range of 20 (J/cm³)^{1/2} to 28 (J/cm³)^{1/2}.

5. The resin molded body according to claim 4, further comprising:
an antireflection layer on a surface of the protective layer opposite to a surface in contact with the resin layer.

6. The resin molded body according to any one of claims 1 to 5,
wherein the compound represented by Formula (1) is a compound represented by Formula (2), 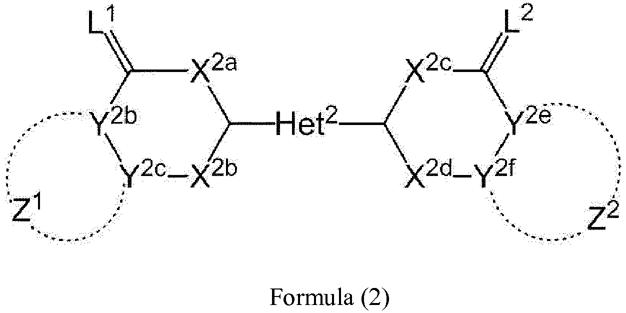
in Formula (2), Het² represents a divalent 5-membered or 6-membered aromatic heterocyclic residue,
X^{2a}, X^{2b}, X^{2c}, and X^{2d} each independently represent a hetero atom,
Y^{2b}, Y^{2c}, Y^{2e}, and Y^{2f} each independently represent a hetero atom or a group containing a carbon atom, and
a ring bonded to Het² may have a double bond at any position,
L¹ and L² each independently represent an oxygen atom, a sulfur atom or NR^{a}, R^{a} represents a hydrogen atom or a monovalent substituent, and
Z¹ and Z² each independently represent an atomic group required to be mutually combined with Y^{2b} and Y^{2c} or Y^{2e} and Y^{2f} to form a 4-membered to 8-membered ring.

7. The resin molded body according to claim 6,
wherein the compound represented by Formula (2) is a compound represented by Formula (3), 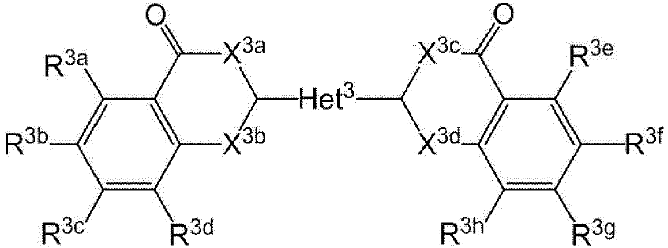 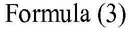
in Formula (3), Het³ represents a divalent 5-membered or 6-membered aromatic heterocyclic residue,
X^{3a}, X^{3b}, X^{3c}, and X^{3d} each independently represent a hetero atom, and
R^{3a}, R^{3b}, R^{3c}, R^{3d}, R^{3e}, R^{3f}, R^{3g}, and R^{3h} each independently represent a hydrogen atom or a monovalent substituent.

8. The resin molded body according to claim 7,
wherein the compound represented by Formula (3) is a compound represented by Formula (4), 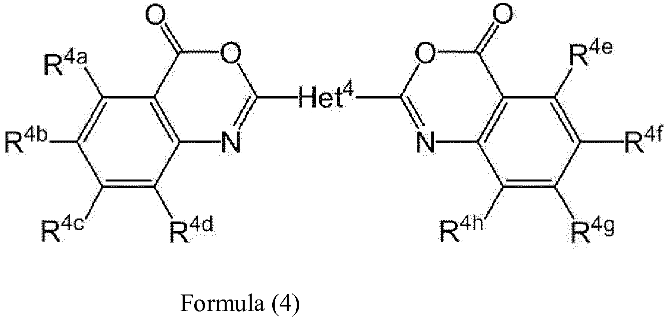
in Formula (4), Het⁴ represents a divalent 5-membered or 6-membered aromatic heterocyclic residue, and
R^{4a}, R^{4b}, R^{4c}, R^{4d}, R^{4e}, R^{4f}, R^{4g}, and R^{4h} each independently represent a hydrogen atom or a monovalent substituent.

9. The resin molded body according to claim 8,
wherein the compound represented by Formula (4) is a compound represented by Formula (5), 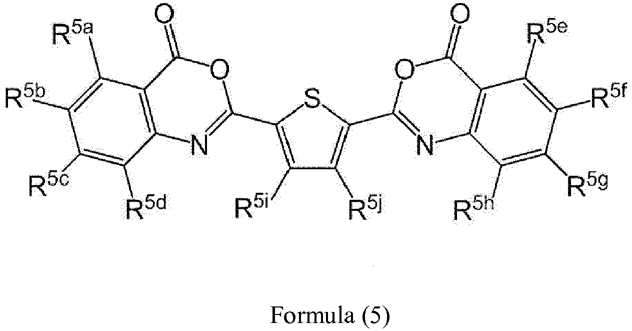
in Formula (5), R^{5a}, R^{5b}, R^{5c}, R^{5d}, R^{5e}, R^{5f}, R^{5g}, and R^{5h} each independently represent a hydrogen atom or a monovalent substituent, and
R⁵ⁱ and R^{5j} each independently represent a hydrogen atom or a monovalent substituent.

10. The resin molded body according to any one of claims 1 to 9 that is a spectacle lens.

11. The resin molded body according to any one of claims 1 to 9 that is a resin film.

12. A blue light cut laminate comprising:
a transparent base material;
a pressure sensitive adhesive layer provided on at least one surface of the transparent base material; and
the resin molded body according to claim 11 that is a resin film and is provided on a surface of the pressure sensitive adhesive layer opposite to a surface in contact with the transparent base material.
